# EUROPEAN PATENT APPLICATION

(11) **EP 4 435 959 A1**
(43) Date of publication of application: **25.09.2024**
(21) Application number: 22892935.2
(22) Date of filing: 15.11.2022
(51) Int. Cl.: H01M 50/522, H01M 50/209, H01M 50/503, H01M 50/505, H01M 50/526, H01M 50/562, H01M 50/571

(54) **BATTERY PACK**

(30) Priority: 15.11.2021 JP 2021185941
(71) Applicant: Vehicle Energy Japan Inc., Ibaraki 312-8505 (JP)
(72) Inventor: TADA Akinori, Hitachinaka-shi, Ibaraki 312-8505 (JP); WATAHIKI Yoshitaka, Hitachinaka-shi, Ibaraki 312-8505 (JP); SUZUKI Takayuki, Hitachinaka-shi, Ibaraki 312-8505 (JP)
(74) Representative: MERH-IP Matias Erny Reichl Hoffmann Patentanwälte PartG mbB
(86) International application number: PCT/JP2022/042385
(87) International publication number: WO 2023/085437

(57) **Abstract**

To provide a battery pack capable of suppressing heat generation due to current flowing through a bus bar and thus suppressing cell deterioration, and improving battery performance by weight reduction. A battery pack 10 includes first to fourth cells 1 to 4 stacked together, each cell including a positive electrode external terminal 12 and a negative electrode external terminal 13 having higher conductivity, and a bus bar 6 that electrically connects the positive electrode external terminal 12 of the second cell 2 and the negative electrode external terminal 13 of the third cell 3, the second and third cells 2 and 3 being disposed side by side next to each other. The bus bar 6 includes a first conductive part 6a connected to the positive electrode external terminal 12 of the second cell 2, a second conductive part 6b connected to the negative electrode external terminal 13 of the third cell 3 and having higher conductivity and higher specific gravity, and a connecting part 6c that connects the first conductive part 6a and the second conductive part 6b. The connecting part 6c is disposed in a first region facing the second cell 2 or in a second region facing the third cell 3.

## Description

### Technical Field

The present invention relates to a battery pack including a plurality of stacked cells and a bus bar.

### Background Art

As this type of battery pack, there is disclosed a battery pack, including unit cells each having a cell body and electrode tabs led out from the cell body, and a flat bus bar to stack the unit cells in a thickness direction and electrically connects together the electrode tabs of the respective unit cells (see patent literature 1). There is also disclosed a battery pack including a plurality of unit cells and a bus bar, in which the bus bar has a pair of flat parts and a folded part to connects the unit cells together, and a joint of a clad material made by joining dissimilar metals is disposed on each of the flat parts (see patent literature 2).

### Citation List

### Patent Literature

Patent Literature 1: Japanese Unexamined Patent Application Publication No. 2017-84468
Patent Literature 2: International Publication NO. WO2018/155090.

### Summary of Invention

### Technical Problem

The battery packs described in the patent literatures 1 and 2 each have the following problem. That is, when the plurality of unit cells are connected in parallel, relatively large current flows through the bus bar, and heat may be generated in the battery pack including the bus bar due to the flowed current. The generated heat disadvantageously accelerates deterioration of the unit cell and in turn deteriorates performance of the battery pack. If copper having high electrical conductivity (S/m, hereinafter referred to as "conductivity") is used as a material for the bus bar, since copper has higher specific gravity than aluminum, weight of the entire battery pack increases, which may reduce fuel efficiency of the battery pack as an on-vehicle battery pack.

An object of the invention, which has been made to solve such problems, is to provide a battery pack capable of suppressing heat generation due to current flowing through a bus bar and thus suppressing cell deterioration, and improving battery performance by weight reduction.

### Solution to Problem

(1) A battery pack according to the invention includes a plurality of cells stacked together, each cell including a positive electrode external terminal and a negative electrode external terminal having higher conductivity than the positive electrode external terminal, and a bus bar that electrically connects a positive electrode external terminal of a first one cell among the cells and a negative electrode external terminal of a second one cell among the cells, the first one cell and the second one cell being disposed side by side next to each other, where the bus bar includes a first conductive part connected to the positive electrode external terminal of the first one cell, a second conductive part connected to the negative electrode external terminal of the second one cell and having higher conductivity and higher specific gravity than the first conductive part, and a connecting part that connects the first conductive part and the second conductive part, the connecting part being disposed in a first region facing the first one cell or in a second region facing the second one cell.

According to the battery pack of (1), for example, when the connecting part is disposed in the first region facing the first one cell, the second conductive part, having a relatively high conductivity, has a wider current flow region than the first conductive part. As a result, current easily flows from the first one cell to the second one cell, and thus heat generation of the bus bar is suppressed, and in turn deterioration of a unit cell due to heat generation is suppressed. On the other hand, when the connecting part is disposed in the second region facing the second one cell, the second conductive part, having a larger specific gravity, has a smaller size than the first conductive part. As a result, weight of the entire battery pack is decreased, resulting in a reduction in weight of the battery pack.

(2) The battery pack according to the invention includes the battery pack of (1), which includes at least a first cell, a second cell, a third cell, and a fourth cell as the plurality of cells, where for the first cell and the second cell, the positive electrode external terminals as well as the negative electrode external terminals are disposed side by side next to each other in a stacking direction of the cells, for the third cell and the fourth cell, the positive electrode external terminals as well as the negative electrode external terminals are disposed side by side next to each other in the stacking direction of the cells, for the first cell as well as the second cell and the third cell as well as the fourth cell, the positive electrode external terminals of the first and second cells and the negative electrode external terminals of the third and fourth cells are disposed next to each other in the stacking direction of the cells, the bus bar extends along the stacking direction of the cells, and is disposed at a position facing the positive electrode external terminals of the first and second cells and facing the negative electrode external terminals of the third and fourth cells, the first conductive part is joined to the positive electrode external terminals of the first and second cells, the second conductive part is joined to the negative electrode external terminals of the third and fourth cells, and the connecting part is disposed in a region, facing at least one of the first and second cells, as the first region, or in a region, facing at least one of the third and fourth cells, as the second region.

According to the battery pack of (2), for example, when the connecting part is disposed in a region, as the first region, facing at least one of the first and second cells, the second conductive part, having a relatively high conductivity, has a wider current flow region than the first conductive part. As a result, current easily flows between the first cell as well as the second cell and the third cell as well as the fourth cell, and thus heat generation of the bus bar is suppressed, and in turn deterioration of a unit cell due to heat generation is suppressed. On the other hand, when the connecting part is disposed in a region, as the second region, facing at least one of the third and fourth cells, the second conductive part, having a larger specific gravity, has a smaller size than the first conductive part. As a result, weight of the entire battery pack is decreased, resulting in a reduction in weight of the battery pack.

(3) The battery pack according to the invention includes the battery pack of (2), where the second conductive part extends from a position facing the third and fourth cells to a position facing the second cell, or extends from the position facing the third and fourth cells to a position facing the second and first cells.

According to the battery pack of (3), the second conductive part extends from the position facing the third and fourth cells toward the second cell, and faces the second cell or the second and first cells. As a result, the second conductive part, having a relatively high conductivity, has a wider current flow region than the first conductive part. As a result, current easily flows between the first cell as well as the second cell and the third cell as well as the fourth cell, and thus heat generation of the bus bar is suppressed, and in turn deterioration of a unit cell due to heat generation is suppressed.

(4) The battery pack according to the invention includes the battery pack of (3), where the connecting part is disposed from an end on one side to an end on the other side of the bus bar in a width direction perpendicular to an extending direction of the bus bar.

(5) The battery pack according to the invention includes the battery pack of (3), where the connecting part is disposed from one end to the other end in a width direction of the bus bar diagonally across an extending direction of the bus bar.

(6) The battery pack according to the invention includes the battery pack of (3), where the connecting part is disposed, in the first region, at a position facing the second cell between an edge of the second cell on a side facing the third cell and the positive electrode external terminal of the second cell.

(7) The battery pack according to the invention includes the battery pack of (3), where the connecting part is disposed at a position facing the positive electrode external terminal of the second cell in the first region.

(8) The battery pack according to the invention includes the battery pack of (3), where the connecting part has a substantially L-shape that extends from an end on one side toward the other side in a width direction perpendicular to the stacking direction of the cells at a position facing the positive electrode external terminal of the second cell in the first region, and is bent toward the stacking direction, and extends to a position facing the positive electrode external terminal of the first cell.

(9) The battery pack according to the invention includes the battery pack of (5), where for the connecting part, in the first region, an end on one side in the width direction of the bus bar is disposed at a position facing the second cell between an edge of the second cell on a side facing the third cell and the center of the positive electrode external terminal of the second cell, the center being the center in the stacking direction of the cells, and an end on the other side in the width direction of the bus bar is disposed at a position facing the first cell between the positive electrode external terminal of the first cell on a side facing the second cell and the center of the positive electrode external terminal of the second cell, the center being the center in the stacking direction of the cells.

(10) The battery pack according to the invention includes the battery pack of (5), where for the connecting part, in the first region, an end on one side in the width direction of the bus bar is disposed at a position facing the second cell between an edge of the second cell on a side facing the third cell and a side facing the third cell of the positive electrode external terminal of the second cell, and an end on the other side in the width direction of the bus bar is disposed at a position facing the first cell between an edge of the first cell on a side away from the second cell and a side facing the second cell of the positive electrode external terminal of the first cell.

(11) The battery pack according to the invention includes the battery pack of (1), where the bus bar has a plurality of flat regions arranged in a row while respectively facing the positive electrode external terminals and the negative electrode external terminals, and has curved regions that are each interposed between the flat regions and curved to protrude in a direction perpendicular to a plane of each of the flat regions and connect between the flat regions adjacent to each other, and at least part of the connecting part is located in at least one of the flat regions.

(12) The battery pack according to the invention includes the battery pack of (1), where the bus bar extends along a stacking direction of the cells, and has a flat-plate shape facing the positive electrode external terminals and the negative electrode external terminals.

(13) The battery pack according to the invention includes the battery pack of (2), where the first conductive part extends from a position facing the first cell and the second cell to a position facing the third cell, or extends from a position facing the first cell and the second cell to a position facing the third cell and the fourth cell.

(14) The battery pack according to the invention includes the battery pack of (1), where the bus bar has an opposing surface facing the positive electrode external terminal and an opposing surface facing the negative electrode external terminal, and in an opposing region of the opposing surface facing one terminal, which includes a material different from a material of the bus bar, between the positive electrode external terminal and the negative electrode external terminal, has a non-contact region with a step to separate the bus bar from the one terminal, or a contact region to allow contact between the bus bar and the one terminal with a plated layer, formed in the opposing region, in between.

According to the invention described in (14), occurrence of corrosion due to direct contact between the bus bar and the terminal made of a dissimilar metal. Advantageous Effects of Invention

According to the invention, it is possible to provide a battery pack capable of suppressing heat generation due to current flowing through a bus bar and thus suppressing cell deterioration, and improving battery performance by weight reduction.

Further features concerning the disclosure will be clarified from the content of this description and the accompanying drawings. Other problems, configurations, and effects will be clarified by the following description of some embodiments.

### Brief Description of Drawings

Fig. 1 is a perspective view of a battery pack according to a first embodiment.
Fig. 2 is an exploded perspective view of the battery pack of the first embodiment.
Fig. 3 is a perspective view of a bus bar according to the first embodiment.
Fig. 4 is a partial plan diagram showing part of the battery pack of the first embodiment.
Fig. 5 is a cross sectional diagram showing the A-A cross section shown in Fig. 4.
Fig. 6 is a partial plan diagram showing part of a battery pack according to a second embodiment.
Fig. 7 is a cross sectional diagram showing the B-B cross section shown in Fig. 6.
Fig. 8 is a partial plan diagram showing part of a battery pack according to a third embodiment.
Fig. 9 is a cross sectional diagram showing the C-C cross section shown in Fig. 8.
Fig. 10 is a perspective view of a bus bar according to a fourth embodiment.
Fig. 11 is a partial plan diagram showing part of a battery pack according to the fourth embodiment.
Fig. 12 is a perspective view of a bus bar according to a fifth embodiment.
Fig. 13 is a partial plan diagram showing part of a battery pack according to the fifth embodiment.
Fig. 14 is a perspective view of a bus bar according to a sixth embodiment.
Fig. 15 is a partial plan diagram showing part of a battery pack according to the sixth embodiment.
Fig. 16 is a perspective view of a bus bar according to a seventh embodiment.
Fig. 17 is a partial plan diagram showing part of a battery pack according to the seventh embodiment.
Fig. 18 is a partial plan diagram showing part of a battery pack according to an eighth embodiment.
Fig. 19 is a partial plan diagram showing part of a battery pack according to a ninth embodiment.
Fig. 20 is a partial plan diagram showing part of a battery pack according to a tenth embodiment. Description of Embodiments

Hereinafter, battery packs 10 to 10I according to first to tenth embodiments, to each of which the battery pack according to the invention is applied, will be described with reference to the drawings.

### First Embodiment

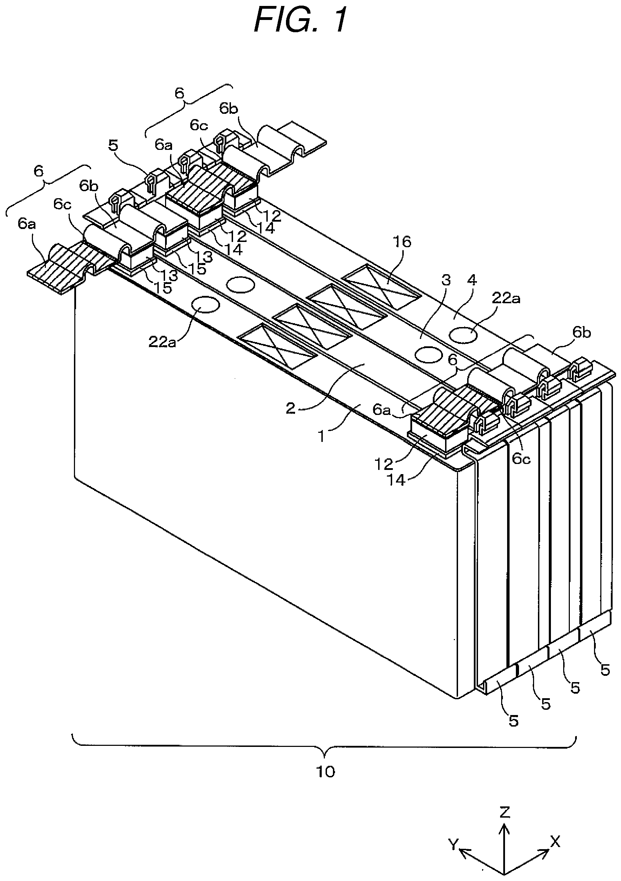

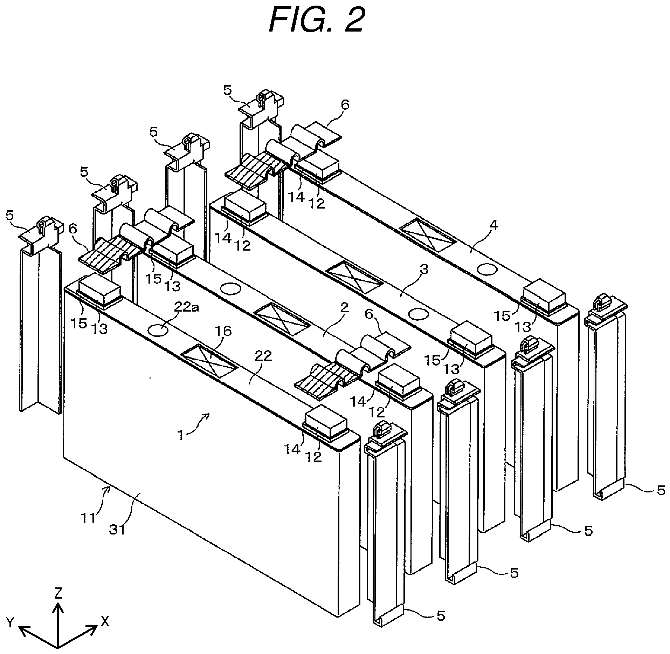

As illustrated in Figs. 1 and 2, the battery pack 10 according to a first embodiment includes a first cell 1, a second cell 2, a third cell 3, a fourth cell 4, a cell holder 5, and a bus bar 6. The first cell 1, the second cell 2, the third cell 3, and the fourth cell 4 are stacked in the X direction shown in Fig. 1, i.e., in the thickness direction.

The first cell 1 and the second cell 2 are electrically connected in parallel via the bus bar 6, and the third cell 3 and the fourth cell 4 are electrically connected in parallel via the bus bar 6. The first cell 1 and the second cell 2, connected in parallel, and the third cell 3 and the fourth cell 4, connected in parallel, are electrically connected in series via the bus bar 6.

Although the battery pack 10 according to the first embodiment has four unit cells, the first to fourth cells 1 to 4, being stacked, the number of cells may be a number other than four. For example, two unit cells or five or more unit cells may be stacked.

As illustrated in Fig. 2, the first cell 1 includes a cell container 11, a positive electrode external terminal 12, a negative electrode external terminal 13, insulators 14 and 15, a gas discharge valve 16, and a liquid injection plug 22a. The cell container 11 includes a cell can 31 and a cell lid 22, which are each made of a metal material, such as aluminum or aluminum alloy.

The cell can 31 is a flat rectangular box with one end opened in the Z direction, and is formed by a processing method such as deep drawing. The cell lid 22 is made of a rectangular flat plate and is formed in the same shape as the opening of the cell can 31 so as to close that opening. The cell lid 22 is joined to the opening portion of the cell can 31 by a joining method such as laser welding to seal the opening of the cell can 31. A positive electrode external terminal 12, a negative electrode external terminal 13, and a gas exhaust valve 16 are attached to the cell lid 22.

As illustrated in Fig. 2, the positive electrode external terminal 12 has a flat joining surface being the end surface in the Z direction, which is to be abutted and joined to the bus bar 6, and is made of aluminum (Al) or an aluminum alloy. The positive electrode external terminal 12 is attached to the end on one side of the battery cover 22 in the longitudinal direction, i.e., in the Y direction, with the insulator 14 in between. The positive electrode external terminal 12 has a structure where width in the transverse direction of the cell lid 22, i.e., in the X direction, is narrower than the width of the cell lid 22, so that the cell lid 22 is exposed by a predetermined width in a direction away from the positive electrode external terminal 12 along the X direction.

As with the positive electrode external terminal 12, the negative electrode external terminal 13 has a flat joining surface being the end surface in the Z direction, which is to be abutted and joined to the bus bar 6, and is made of copper (Cu) or a copper alloy. The negative electrode external terminal 13 is attached to the end on the other side in the Y direction of the cell lid 22 of the cell container 11 with the insulator 15 in between. The negative electrode external terminal 13 has a shape where width in the X direction of the cell lid 22 is narrower than width of the cell lid 22, and has a structure where the cell lid 22 is exposed by a predetermined width in a direction away from the negative electrode external terminal 13 along the X direction. In other words, a portion where the cell lid 22 is exposed is provided between an edge, extending in the Y direction, of the cell lid 22 and the negative electrode external terminal 13.

As illustrated in Fig. 2, the positive electrode external terminal 12 and the negative electrode external terminal 13 are disposed at positions separated from each other in the longitudinal direction of the cell lid 22. The respective joining surfaces of the positive and negative electrode external terminals 12 and 13 are set to have the same height from the cell lid 22.

The first cell 1 and the second cell 2 are disposed so that the positive electrode external terminals 12 and the negative electrode external terminals 13 are respectively arranged next to each other in the X direction being the stacking direction. The third cell 3 and the fourth cell 4 are also disposed so that the positive electrode external terminals 12 and the negative electrode external terminals 13 are respectively arranged next to each other in the X direction being the stacking direction. The first cell 1 as well as the second cell 2 and the third cell 3 as well as the fourth cell 4 are disposed so that the positive electrode external terminals 12 and the negative electrode external terminals 13 are respectively arranged next to each other in the X direction being the stacking direction.

As illustrated in Fig. 2, the second cell 2, the third cell 3, and the fourth cell 4 are each configured in the same way as the first cell 1. After the first cell 1, the second cell 2, the third cell 3, and the fourth cell 4 are stacked, respective two ends in the Y direction of the unit cells are held by four cell holders 5, and the stacked state is thus maintained.

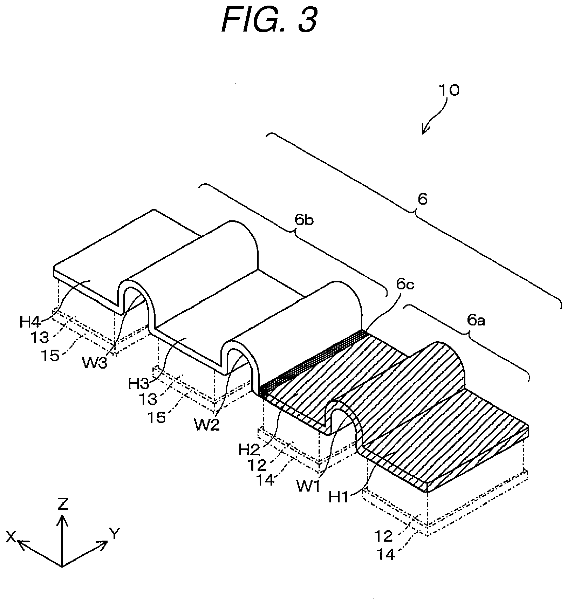

As illustrated in Figs. 3, 4, and 5, the bus bar 6 is configured of a single structure, in which a first conductive part 6a, a second conductive part 6b, and a connecting part 6c, which electrically connects the first conductive part 6a and the second conductive part 6b, are integrally combined. The connecting part 6c indicates a boundary portion between the first conductive part 6a and the second conductive part 6b. The bus bar 6 has a plurality of flat regions, arranged in a row, respectively facing the positive electrode external terminals 12 and the negative electrode external terminals 13, and curved regions that are each interposed between the flat regions and curved to protrude in a direction perpendicular to a plane of each flat region and connect between the flat regions adjacent to each other.

As illustrated in Figs. 3, 4 and 5, the bus bar 6 has flat regions H1, H2, H3, and H4, which face the respective joining surfaces of the positive electrode external terminals 12 and of the negative electrode external terminals 13 when disposed extending in the stacking direction of the first cell 1, the second cell 2, the third cell 3, and the fourth cell 4. Moreover, the bus bar 6 has a curved region W1 between the flat regions H1 and H2, which is formed to be curved to protrude in a direction perpendicular to the plane of each of the flat regions H1 and H2. The bus bar 6 has, as with the curved region W1, a curved region W2 formed between the flat regions H2 and H3, and a curved region W3 formed between the flat regions H3 and H4. The curved regions W1, W2, and W3 each have a function of relaxing shock such as vibration that acts on the battery pack 10, and a function of relaxing stress that occurs at the joint between the positive electrode external terminal 12 and the negative electrode external terminal 13.

The first conductive part 6a is made of a metal material mainly including aluminum, and is joined at the flat regions H1 and H2 to the positive electrode external terminals 12, made of aluminum or aluminum alloy, of the first and second cells 1 and 2 by point joining or surface joining with a joining method such as laser welding. The first conductive part 6a has lower conductivity and smaller specific gravity than the second conductive part 6b.

The second conductive part 6b is made of a metal material mainly including copper, and is joined at the flat regions H3 and H4 to the negative electrode external terminals 13, made of copper or copper alloy, of the third and fourth cells 3 and 4 by point joining or surface joining with a joining method such as laser welding. The second conductive part 6b has higher conductivity and larger specific gravity than the first conductive part 6a.

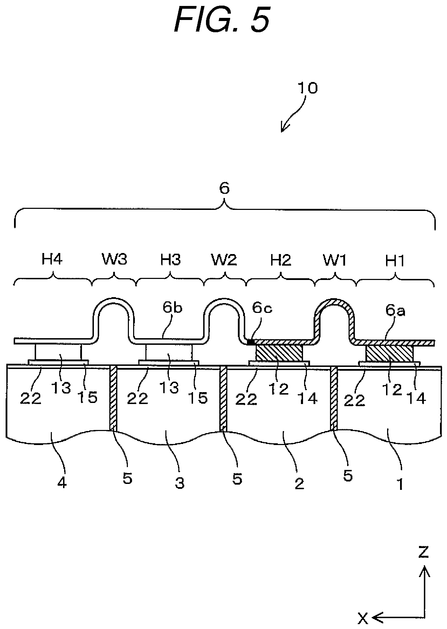

The bus bar 6 is formed so that the second conductive part 6b has longer length in the extending direction than the first conductive part 6a. For example, as illustrated in Fig. 5, the bus bar 6 is configured so that when the flat regions H1 and H2 are disposed to overlap the respective joining surfaces of the positive electrode external terminals 12 of the first and second cells 1 and 2, and the flat regions H3 and H4 are disposed to overlap the joining surfaces of the negative electrode external terminals 13 of the third and fourth cells 3 and 4, the second conductive part 6b faces the respective third and fourth cells 3 and 4, the end of the second conductive part 6b has a length so as to extend to a position facing the second cell 2, and the connecting part 6c is disposed at a position facing the cell lid 22 of the second cell 2.

The bus bar 6 connects the first conductive part 6a and the second conductive part 6b via the connecting part 6c, and is a clad material of aluminum and copper combined with each other. The clad material is mainly formed by rolling and joining dissimilar metals, and has a hardly separable property despite using no adhesive.

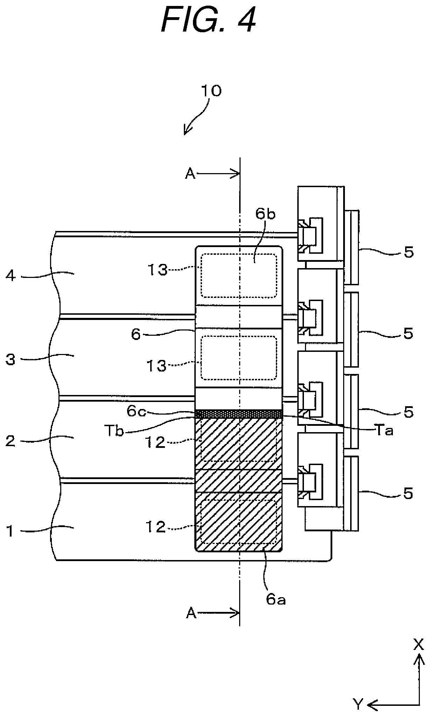

As illustrated in Fig. 4, the connecting part 6c is disposed from an end Ta on one side to an end Tb on the other side of the bus bar 6 in the width direction perpendicular to the extending direction of the bus bar 6. The connecting part 6c is formed over the entire width of the bus bar 6, and divides the bus bar 6 into a first side including the first conductive part 6a and a second side including the second conductive part 6b in the extending direction of the bus bar 6. The connecting part 6c is entirely formed in a first region, which faces the second cell 2 and the first cell 1, of the bus bar 6. The connecting part 6c is formed in the flat region H2 in the first embodiment, and as shown in Fig. 3, is provided along the width direction of the bus bar 6 near the boundary between the flat region H2 and the curved region W2. When the bus bar 6 is attached as shown in Fig. 5, the connecting part 6c is located facing the cell lid 22 of the second cell 2 between an edge of the cell lid 22 and the positive electrode external terminal 12 of the second cell 2. The edge of the cell lid 22 of the second cell 2 corresponds to the edge of the second cell on the side facing the third cell in claim 6 of the claims.

In the battery pack 10 according to the first embodiment, the first cell 1 and the second cell 2 are connected in parallel, the third cell 3 and the fourth cell 4 are connected in parallel, and the first cell 1 and the second cell 2 connected in parallel are connected in series with the third cell 3 and the fourth cell 4 connected in parallel. Hence, when current flows in the direction from the first and second cells 1 and 2 to the third and fourth cells 3 and 4, equivalent current flows through the first cell 1, the second cell 2, the third cell 3, and the fourth cell 4.

Current flowing from the first cell 1 and current flowing from the second cell 2 both flow between a location where the bus bar 6 is joined to the positive electrode external terminal 12 of the second cell 2, and a location where the bus bar 6 is joined to the negative electrode external terminal 13 of the third cell 3, resulting in relatively large current.

Effects of the battery pack 10 according to the first embodiment are now described.

The battery pack 10 according to the first embodiment includes: the positive electrode external terminals 12 and the negative electrode external terminals 13 each having higher conductivity than the positive electrode external terminal 12; the first to fourth cells 1 to 4 stacked together; and the bus bar 6 that electrically connects the positive electrode external terminal 12 of the second cell 2 and the negative electrode external terminal 13 of the respective second and third cells 2 and 3, which are disposed side by side next to each other, among the first to fourth cells 1 to 4. The bus bar 6 includes the first conductive part 6a connected to the positive electrode external terminals 12, the second conductive part 6b connected to the negative electrode external terminals 13 and having higher conductivity and higher specific gravity than the first conductive part 6a, and the connecting part 6c that connects the first conductive part 6a and the second conductive part 6b, where the connecting part 6c is disposed at a position facing the second cell 2.

In more details, the battery pack 10 includes the first cell 1, the second cell 2, the third cell 3 and the fourth cell 4 as the plurality of cells, where for the first cell 1 and the second cell 2, the positive electrode external terminals 12 as well as the negative electrode external terminals 13 are disposed side by side next to each other in the stacking direction of the first to fourth cells 1 to 4, and for the third cell 3 and the fourth cell 4, the positive electrode external terminals 12 as well as the negative electrode external terminals 13 are disposed side by side next to each other in the stacking direction of the first to fourth cells 1 to 4. The positive electrode external terminals 12 of the first and second cells 1 and 2 and the negative electrode external terminals 13 of the third and fourth cells 3 and 4 are arranged in a row next to each other in the stacking direction of the first to fourth cells 1 to 4. The bus bar 6 extends along the stacking direction of the first to fourth cells 1 to 4, and is disposed at a position facing the positive electrode external terminals 12 of the first and second cells 1 and 2 and facing the negative electrode external terminals 13 of the third and fourth cells 3 and 4. The first conductive part 6a is joined to the positive electrode external terminals 12 of the first and second cells 1 and 2, the second conductive part 6b is joined to the negative electrode external terminals 13 of the third and fourth cells 3 and 4, and the connecting part 6c is disposed in a region, facing at least one of the first and second cells 1 and 2, as the first region.

According to the battery pack 10 of the first embodiment, since the end of the second conductive part 6b has a length extending from a position facing the third and fourth cells 3 and 4 to a position facing the second cell 2, and the connecting part 6c is configured to be disposed at a position facing the cell lid 22 of the second cell 2, the second conductive part 6b, having a relatively high conductivity, has a wider current flow region than the first conductive part 6a. As a result, current easily flows between the first cell 1 as well as the second cell 2 and the third cell 3 as well as the fourth cell 4, and heat generation of the bus bar 6 is thus suppressed, and in turn acceleration of deterioration of the unit cell due to heat generation is suppressed, advantageously making it possible to improve performance of the battery pack 10.

In the battery pack 10 according to the first embodiment, the bus bar 6 has the flat regions H1, H2, H3, and H4 facing in parallel with the unit cells along the stacking direction of the unit cells, and the curved regions W1, W2, and W3 that protrude in a direction perpendicular to the stacking direction of the unit cells and away from the cell lids 22, and face the respective cell lids 22. Such a configuration allows the bus bar 6 to be electrically connected to the positive electrode external terminals 12 and the negative electrode external terminals 13 at the respective flat regions H1, H2, H3, and H4. The provided curved regions W1, W2, and W3 make it possible to relax shock such as vibration acting on the battery pack 10, and reduce stress generated in the connecting part 6c, and thus advantageously improve durability of the battery pack.

The battery pack 10 according to the first embodiment has been described with the case where the connecting part 6c of the bus bar 6 is formed in the flat region H2 along the curved region W2 near the boundary between the flat region H2 and the curved region W2. For the battery pack according to the invention, the connecting part of the bus bar may be configured of a structure other than the connecting part 6c of the bus bar 6. Hereinafter, a battery pack 10A according to a second embodiment to a battery pack 10I according to a tenth embodiment, in each of which the connecting part of the bus bar is configured of a structure other than the connecting part 6c of the bus bar 6, are described with reference to the drawings. The same components as in the battery pack 10 according to the first embodiment are designated by the same reference numerals, and detailed description thereof is omitted.

### Second Embodiment

The battery pack 10A according to the second embodiment includes a first cell 1, a second cell 2, a third cell 3, a fourth cell 4, a cell holder 5, and a bus bar 6A.

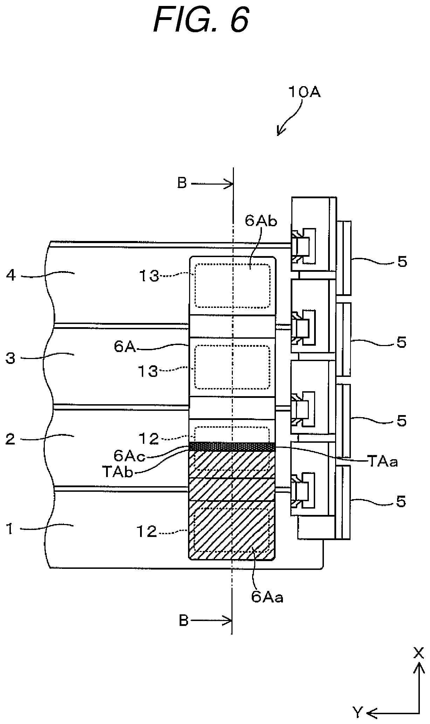

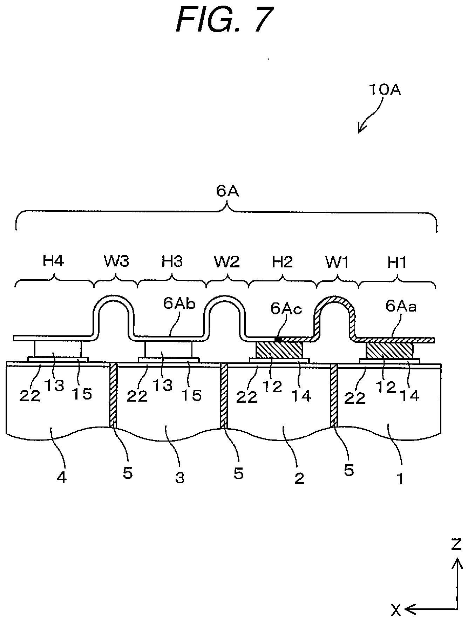

As illustrated in Figs. 6 and 7, the bus bar 6A is configured of a single structure, in which a first conductive part 6Aa, a second conductive part 6Ab, and a connecting part 6Ac, which electrically connects the first conductive part 6Aa and the second conductive part 6Ab, are integrally combined. As with the connecting part 6c in the first embodiment, the connecting part 6Ac indicates a boundary portion between the first conductive part 6Aa and the second conductive part 6Ab. The bus bar 6A has flat regions H1, H2, H3, and H4, which face in parallel with the first cell 1, the second cell 2, the third cell 3, and the fourth cell 4, respectively, along the stacking direction of the cells 1 to 4.

The bus bar 6A has curved regions W1, W2, and W3 similar to those in the first embodiment, which function in the same way as in the first embodiment.

The first conductive part 6Aa is made of a metal material mainly including aluminum, and is joined at the flat regions H1 and H2 to the positive electrode external terminals 12, made of aluminum or aluminum alloy, of the first and second cells 1 and 2 by point joining or surface joining with a joining method such as laser welding. The first conductive part 6Aa has lower conductivity and smaller specific gravity than the second conductive part 6Ab.

As with the bus bar 6 in the first embodiment, the second conductive part 6Ab is made of a metal material mainly including copper, and is joined at the flat regions H3 and H4 to the negative electrode external terminals 13, made of copper or copper alloy, of the third and fourth cells 3 and 4 by point joining or surface joining with a joining method such as laser welding. The second conductive part 6Ab has higher conductivity and larger specific gravity than the first conductive part 6Aa. The second conductive part 6Ab extends from a position facing the third and fourth cells 3 and 4 to a position facing the second cell 2.

Since the connecting part 6Ac connects the first conductive part 6Aa and the second conductive part 6Ab as with the bus bar 6 in the first embodiment, the bus bar 6A is made of a clad material of aluminum and copper. As illustrated in Fig. 6, the connecting part 6Ac is disposed from an end TAa on one side to an end TAb on the other side of the bus bar 6A in the width direction perpendicular to the extending direction of the bus bar 6A. The connecting part 6Ac is formed over the entire width of the bus bar 6A, and divides the bus bar 6A into a first side including the first conductive part 6Aa and a second side including the second conductive part 6Ab in the extending direction of the bus bar 6A. The connecting part 6Ac is entirely formed in a first region, which faces the second cell 2 and the first cell 1, of the bus bar 6A. The connecting part 6Ac is formed in the flat region H2 in the second embodiment, and is located facing the center of the positive electrode external terminal 12 of the second cell 2 when the bus bar 6A is attached to the cells.

Since the first conductive part 6Aa and the positive electrode external terminal 12 in the flat region H2 are each made of aluminum, the first conductive part 6Aa and the positive electrode external terminal 12 are joined together in the region of the first conductive part 6Aa in the flat region H2. On the other hand, in the region from the connecting part 6Ac to the curved region W2 in the flat region H2, since the second conductive part 6Ab is made of copper, while the positive electrode external terminal 12 is made of aluminum, corrosion may occur due to contact between the dissimilar metals. The bus bar 6A has a corrosion prevention structure to prevent such corrosion.

Examples of the corrosion prevention structure include the bus bar 6A that has, in an opposing region of the opposing surface facing one terminal, which includes a material different from the material of the bus bar 6A, between the positive and negative electrode external terminals 12 and 13, a non-contact region with a step to separate the bus bar 6A from the one terminal, or a contact region to allow contact between the bus bar 6A and the one terminal with a plated layer, formed in the opposing region, in between. For example, the corrosion prevention structure includes a structure, in which a step is formed in the region from the connecting part 6Ac to the curved region W2 in the flat region H2 to prevent contact between the bus bar 6A and the terminal, and a structure with surface treatment such as plating performed on the region to prevent corrosion.

Since connection of the cells and current flowing through each cell in the battery pack 10A according to the second embodiment are the same as in the battery pack 10 according to the first embodiment, description thereof is omitted.

Current flows between the first cell as well as the second cell and the third cell as well as the fourth cell between a location where the bus bar 6A is joined to the positive electrode external terminal 12 of the second cell 2, and a location where the bus bar 6A is joined to the negative electrode external terminal 13 of the third cell 3, resulting in relatively large current.

Effects of the battery pack 10A according to the second embodiment are now described.

The battery pack 10A according to the second embodiment includes: the positive electrode external terminals 12 and the negative electrode external terminals 13 each having higher conductivity than the positive electrode external terminal 12; the first cell 1, the second cell 2, the third cell 3, and the fourth cell 4 stacked in this order; and the bus bar 6A including the first conductive part 6Aa, the second conductive part 6Ab having higher conductivity and larger specific gravity than the first conductive part 6Aa, and the connecting part 6Ac.

The first conductive part 6Aa is Joined to the positive electrode external terminals 12 of the first and second cells 1 and 2, the second conductive part 6Ab is joined to the negative electrode external terminals 13 of the third and fourth cells 3 and 4, and the connecting part 6Ac is formed in parallel with the curved region W2 in the center in the X direction of the flat region H2. The second conductive part 6Ab extends from a position facing the third and fourth cells 3 and 4 to a position facing the second cell 2, and the connecting part 6Ac is disposed in a region facing the positive electrode external terminal 12 of the second cell 2.

According to the battery pack 10A of the second embodiment, since the end of the second conductive part 6Ab has a length extending from a position facing the third and fourth cells 3 and 4 to a position facing the second cell 2, and the connecting part 6Ac is configured to be disposed at a position facing the positive electrode external terminal 12 of the second cell 2, the second conductive part 6Ab, having a relatively high conductivity, has a wider current flow region than the first conductive part 6Aa. As a result, current easily flows between the first cell 1 as well as the second cell 2 and the third cell 3 as well as the fourth cell 4, and heat generation of the bus bar 6A is thus suppressed, and in turn acceleration of deterioration of the unit cell due to heat generation is suppressed, advantageously making it possible to improve performance of the battery pack 10A.

### Third Embodiment

The battery pack 10B according to a third embodiment includes a first cell 1, a second cell 2, a third cell 3, a fourth cell 4, a cell holder 5, and a bus bar 6B.

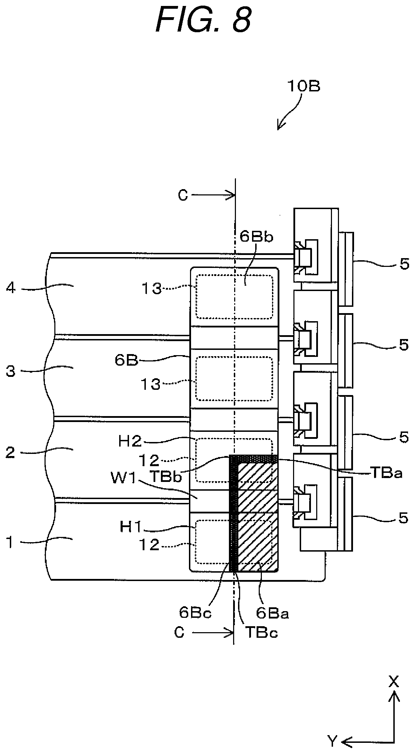

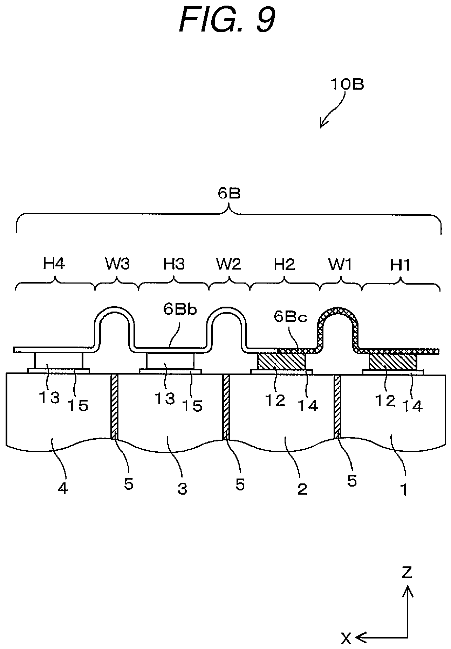

As illustrated in Figs. 8 and 9, as with the bus bar 6 in the first embodiment, the bus bar 6B is configured of a single structure, in which a first conductive part 6Ba, a second conductive part 6Bb, and a connecting part 6Bc, which electrically connects the first conductive part 6Ba and the second conductive part 6Bb, are integrally combined. As with the connecting part 6c in the first embodiment, the connecting part 6Bc indicates a boundary portion between the first conductive part 6Ba and the second conductive part 6Bb. As with the bus bar 6 in the first embodiment, the bus bar 6B has flat regions H1, H2, H3, and H4, which face in parallel with the first cell 1, the second cell 2, the third cell 3, and the fourth cell 4, respectively, along the stacking direction of the cells 1 to 4.

The bus bar 6B has curved regions W1, W2, and W3 similar to those in the first embodiment, which function in the same way as in the first embodiment.

As with the bus bar 6 in the first embodiment, the first conductive part 6Ba is made of a metal material mainly including aluminum, and is joined at the flat regions H1 and H2 to the positive electrode external terminals 12, made of aluminum or aluminum alloy, of the first and second cells 1 and 2 by point joining or surface joining with a joining method such as laser welding. The first conductive part 6Ba has lower conductivity and smaller specific gravity than the second conductive part 6Bb.

As with the bus bar 6 in the first embodiment, the second conductive part 6Bb is made of a metal material mainly including copper, and is joined at the flat regions H3 and H4 to the negative electrode external terminals 13, made of copper or copper alloy, of the third and fourth cells 3 and 4 by point joining or surface joining with a joining method such as laser welding. The second conductive part 6Bb has higher conductivity and larger specific gravity than the first conductive part 6Ba. The second conductive part 6Bb partially extends from a position facing the third and fourth cells 3 and 4 to a position facing the second and first cells 2 and 1.

The second conductive part 6Bb faces a first partial region of the positive electrode external terminal 12 of the second cell 2 and a first partial region of the positive electrode external terminal 12 of the first cell 1, and the first conductive part 6Ba is disposed at a position facing a second partial region of the positive electrode external terminal 12 of the second cell 2 and a second partial region of the positive electrode external terminal 12 of the first cell 1. In the third embodiment, the first conductive part 6Ba has a size enough to face approximately a quarter of the area of the positive electrode external terminal 12 of the second cell 2 and to face approximately half the area of the positive electrode external terminal 12 of the first cell 1. The second conductive part 6Bb has a size enough to face approximately three-fourths of the area of the positive electrode external terminal 12 of the second cell 2 and to face approximately half the area of the positive electrode external terminal 12 of the first cell 1.

Since the connecting part 6Bc connects the first conductive part 6Ba and the second conductive part 6Bb as with the bus bar 6 in the first embodiment, the bus bar 6B is made of a clad material of aluminum and copper. As illustrated in Figs. 8 and 9, the connecting part 6Bc is formed into a substantially L-shape so as to extend from the edge TBa of the flat region H2 at the center in the X direction of the flat region H2 to the center TBb in the Y direction of the flat region H2, and at the center in the Y direction of each of the flat regions H1 and H2, extend from the edge TBc in the X direction of the flat region H1 to the center in the X direction of the flat region H2 while passing over the curved regions W1.

Since the first conductive part 6Ba and the positive electrode external terminal 12 in the flat regions H1 and H2 are each made of aluminum, the first conductive part 6Ba and the positive electrode external terminal 12 are joined together in the region of the first conductive part 6Ba in the flat regions H1 and H2, i.e., in the region inside the L shape. On the other hand, in the region outside the L shape in the flat regions H1 and H2, since the second conductive part 6Bb is made of copper, while the positive electrode external terminal 12 is made of aluminum, corrosion may occur due to contact between the dissimilar metals. The bus bar 6B has a corrosion prevention structure to prevent such corrosion.

As with the bus bar 6A in the second embodiment, examples of the corrosion prevention structure include the bus bar 6B that has, in an opposing region of the opposing surface facing one terminal, which includes a material different from the material of the bus bar 6B, between the positive and negative electrode external terminals 12 and 13, a non-contact region with a step to separate the bus bar 6B from the one terminal, or a contact region to allow contact between the bus bar 6B and the one terminal with a plated layer, formed in the opposing region, in between.

Since connection of the cells and current flowing through each cell in the battery pack 10B according to the third embodiment are the same as in the battery pack 10 according to the first embodiment, description thereof is omitted.

Current flows between the first cell as well as the second cell and the third cell as well as the fourth cell between a location where the bus bar 6B is joined to the positive electrode external terminal 12 of the second cell 2, and a location where the bus bar 6B is joined to the negative electrode external terminal 13 of the third cell 3, resulting in relatively large current.

Effects of the battery pack 10B according to the third embodiment are now described.

The battery pack 10B according to the third embodiment includes: the positive electrode external terminals 12 and the negative electrode external terminals 13 each having higher conductivity than the positive electrode external terminal 12; the first cell 1, the second cell 2, the third cell 3, and the fourth cell 4 stacked in this order; and the bus bar 6B including the first conductive part 6Ba, the second conductive part 6Bb having higher conductivity and larger specific gravity than the first conductive part 6Ba, and the connecting part 6Bc.

The first conductive part 6Ba is joined to the positive electrode external terminals 12 of the first and second cells 1 and 2, the second conductive part 6Bb is joined to the negative electrode external terminals 13 of the third and fourth cells 3 and 4, and the connecting part 6Bc has a substantially L-shape that, in the first region, extends from an end on one side of the bus bar toward an end on the other side thereof in the width direction perpendicular to the stacking direction of the cells at a position facing the positive electrode external terminal 12 of the second cell 2, and is bent toward the stacking direction of the cells, and extends to a position facing the positive electrode external terminal 12 of the first cell 1.

According to the battery pack 10B of the third embodiment, the end of the second conductive part 6Bb extends from a position facing the third and fourth cells 3 and 4 to a position facing a part of the second cell 2 and a part of the first cell 1, and thus the bus bar 6B has a corresponding length. The connecting part 6Bc has a substantially L-shape that extends from an end of the bus bar on one side in the width direction perpendicular to the stacking direction of the cells toward the other side at a position facing the positive electrode external terminal 12 of the second cell 2 in the first region, and bent toward the stacking direction of the cells, and extends to a position facing the positive electrode external terminal 12 of the first cell 1. The first conductive part 6Ba faces approximately a quarter of the area of the positive electrode external terminal 12 of the second cell 2 and faces approximately half the area of the positive electrode external terminal 12 of the first cell 1. The second conductive part 6Bb faces approximately three-fourths of the area of the positive electrode external terminal 12 of the second cell 2 and faces approximately half the area of the positive electrode external terminal 12 of the first cell 1. As a result, the second conductive part 6Bb having a relatively high conductivity has a wider current flow region than the first conductive part 6Ba. Moreover, since the first conductive part 6Ba and the second conductive part 6Bb are adjacent to each other via the connecting part 6Bc extending along the X direction being the extending direction of the bus bar 6B, current advantageously easily flows from the first conductive part 6Ba to the second conductive part 6Bb. Consequently, current easily flows between the first cell 1 as well as the second cell 2 and the third cell 3 as well as the fourth cell 4, and heat generation of the bus bar 6B is thus suppressed, and in turn acceleration of deterioration of the unit cell due to heat generation is suppressed, advantageously making it possible to improve performance of the battery pack 10B.

### Fourth Embodiment

The battery pack 10C according to a fourth embodiment includes a first cell 1, a second cell 2, a third cell 3, a fourth cell 4, a cell holder 5, and a bus bar 6C.

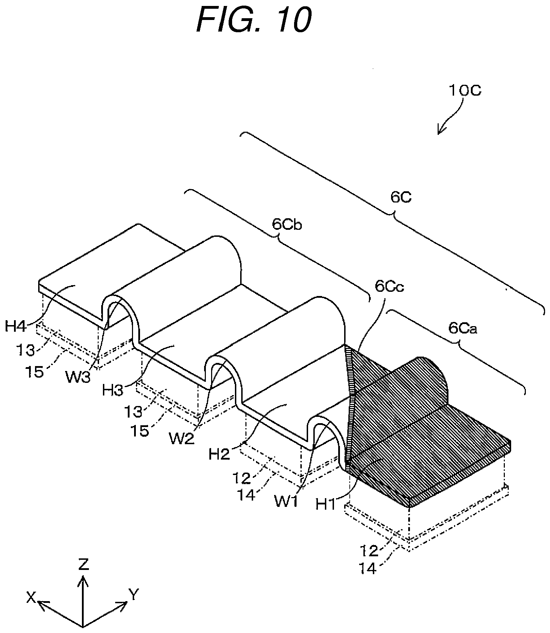

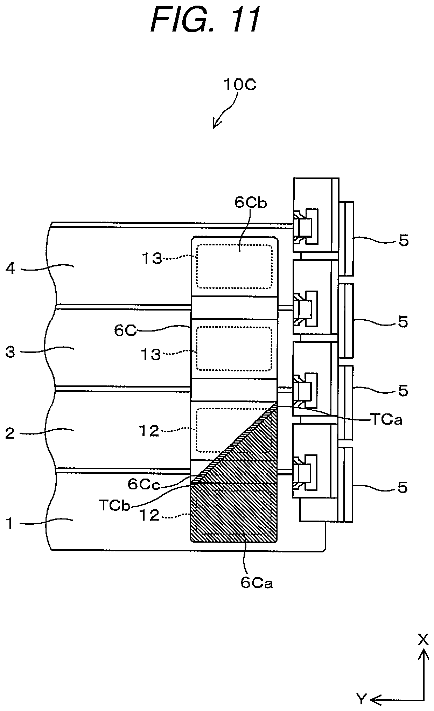

As illustrated in Figs. 10 and 11, as with the bus bar 6 in the first embodiment, the bus bar 6C is configured of a single structure, in which a first conductive part 6Ca, a second conductive part 6Cb, and a connecting part 6Cc, which electrically connects the first conductive part 6Ca and the second conductive part 6Cb, are integrally combined. As with the connecting part 6c in the first embodiment, the connecting part 6Cc indicates a boundary portion between the first conductive part 6Ca and the second conductive part 6Cb. As with the bus bar 6 in the first embodiment, the bus bar 6C has flat regions H1, H2, H3, and H4, which face in parallel with the first cell 1, the second cell 2, the third cell 3, and the fourth cell 4, respectively, along the stacking direction of the cells 1 to 4.

The bus bar 6C has curved regions W1, W2, and W3 similar to those in the first embodiment, which function in the same way as in the first embodiment.

As with the bus bar 6 in the first embodiment, the first conductive part 6Ca is made of a metal material mainly including aluminum, and is joined at the flat regions H1 and H2 to the positive electrode external terminals 12, made of aluminum or aluminum alloy, of the first and second cells 1 and 2 by point joining or surface joining with a joining method such as laser welding. The first conductive part 6Ca has lower conductivity and smaller specific gravity than the second conductive part 6Cb.

As with the bus bar 6 in the first embodiment, the second conductive part 6Cb is made of a metal material mainly including copper, and is joined at the flat regions H3 and H4 to the negative electrode external terminals 13, made of copper or copper alloy, of the third and fourth cells 3 and 4 by point joining or surface joining with a joining method such as laser welding. The second conductive part 6Cb has higher conductivity and larger specific gravity than the first conductive part 6Ca.

Since the connecting part 6Cc connects the first conductive part 6Ca and the second conductive part 6Cb as with the bus bar 6 in the first embodiment, the bus bar 6C is made of a clad material of aluminum and copper. As illustrated in Fig. 11, the connecting part 6Cc is disposed from one end TCa to the other end TCb in the width direction of the bus bar 6C diagonally across the extending direction of the bus bar 6C. The connecting part 6Cc is formed over the entire width of the bus bar 6C, and divides the bus bar 6C into a first side including the first conductive part 6Ca and a second side including the second conductive part 6Cb in the extending direction of the bus bar 6C. The connecting part 6Cc is entirely formed in a first region, which faces the second cell 2 and the first cell 1, of the bus bar 6C. The connecting part 6Cc extends across between the flat regions H1 and H2 diagonally with respect to the extending direction (X direction) of the bus bar 6C while passing over the curved region W1.

For the connecting part 6Cc, as illustrated in Figs. 10 and 11, in the first region, an end TCa on one width-directional side of the bus bar 6C is disposed at a position facing the second cell 2 between the edge of the second cell 2 on the side facing the third cell 3 (the edge of the cell lid 22 of the second cell 2) and the side facing the third cell 3 of the positive electrode external terminal 12 of the second cell 2, and an end TCb on the other width-directional side of the bus bar 6C is disposed at a position facing the first cell 1 between the edge of the first cell 1 on the side away from the second cell 2 and the side facing the second cell of the positive electrode external terminal 12 of the first cell 1.

Since the first conductive part 6Ca and the positive electrode external terminal 12 in the flat region H2 are each made of aluminum, the first conductive part 6Ca and the positive electrode external terminal 12 are joined together in the region of the first conductive part 6Ca in the flat region H2. On the other hand, in the region from the connecting part 6Cc to the curved region W2 in the flat region H2, since the second conductive part 6Cb is made of copper, while the positive electrode external terminal 12 is made of aluminum, corrosion may occur due to contact between the dissimilar metals. The bus bar 6C has a corrosion prevention structure to prevent such corrosion.

As with the bus bar 6A in the second embodiment, examples of the corrosion prevention structure include the bus bar 6C that has a non-contact region or a contact region similar to that of the bus bar 6A in an opposing region of the opposing surface facing one terminal, which includes a material different from the material of the bus bar 6C, between the positive and negative electrode external terminals 12 and 13.

Since connection of the cells and current flowing through each cell in the battery pack 10C according to the fourth embodiment are the same as in the battery pack 10 according to the first embodiment, description thereof is omitted.

Current flows between the first cell as well as the second cell and the third cell as well as the fourth cell between a location where the bus bar 6C is joined to the positive electrode external terminal 12 of the second cell 2, and a location where the bus bar 6C is joined to the negative electrode external terminal 13 of the third cell 3, resulting in relatively large current.

Effects of the battery pack 10C according to the fourth embodiment are now described.

The battery pack 10C according to the fourth embodiment includes: the positive electrode external terminals 12 and the negative electrode external terminals 13 each having higher conductivity than the positive electrode external terminal 12; the first cell 1, the second cell 2, the third cell 3, and the fourth cell 4 stacked in this order; and the bus bar 6C including the first conductive part 6Ca, the second conductive part 6Cb having higher conductivity and larger specific gravity than the first conductive part 6Ca, and the connecting part 6Cc.

The first conductive part 6Ca is joined to the positive electrode external terminals 12 of the first and second cells 1 and 2, and the second conductive part 6Cb is joined to the negative electrode external terminals 13 of the third and fourth cells 3 and 4. The connecting part 6Cc is configured so as to extend linearly from the end on one width-directional side to the end on the other width-directional side of the bus bar 6C diagonally across the extending direction of the bus bar 6C. For the connecting part 6Cc, the end on one width-directional side of the bus bar 6C is disposed at a diagonal position between the edge of the second cell 2 on the side facing the third cell 3 and the positive electrode external terminal 12 of the second cell 2, and the end on the other width-directional side of the bus bar 6C is disposed at a diagonal position between the edge of the first cell 1 on the side facing the second cell 2 and the positive electrode external terminal 12 of the first cell 1.

According to the battery pack 10C of the fourth embodiment, since the end of the second conductive part 6Cb has a length extending from a position facing the third and fourth cells 3 and 4 to a position facing the first and second cells 1 and 2, and the connecting part 6Cc is configured so as to extend linearly from the end on one width-directional side to the end on the other width-directional side of the bus bar 6C diagonally across the extending direction of the bus bar 6C, the second conductive part 6Cb, having a relatively high conductivity, has a wider current flow region than the first conductive part 6Ca. As a result, current easily flows between the first cell 1 as well as the second cell 2 and the third cell 3 as well as the fourth cell 4, and heat generation of the bus bar 6C is thus suppressed, and in turn acceleration of deterioration of the unit cell due to heat generation is suppressed, advantageously making it possible to improve performance of the battery pack 10C.

For the battery pack 10C according to the fourth embodiment, the second conductive part 6Cb of the bus bar 6C faces the second cell 2, and any region of the connecting part 6Cc is located in any one region from the positive electrode external terminal 12 of the second cell 2 to the first cell 1. Such a configuration advantageously makes it possible to achieve a good balance between weight reduction of the battery pack 10C and suppression of deterioration of the unit cell due to heat generation by the first conductive part 6Ca having smaller specific gravity but lower conductivity, and the second conductive part 6Cb having higher specific gravity but higher conductivity.

### Fifth Embodiment

The battery pack 10D according to a fifth embodiment includes a first cell 1, a second cell 2, a third cell 3, a fourth cell 4, a cell holder 5, and a bus bar 6D.

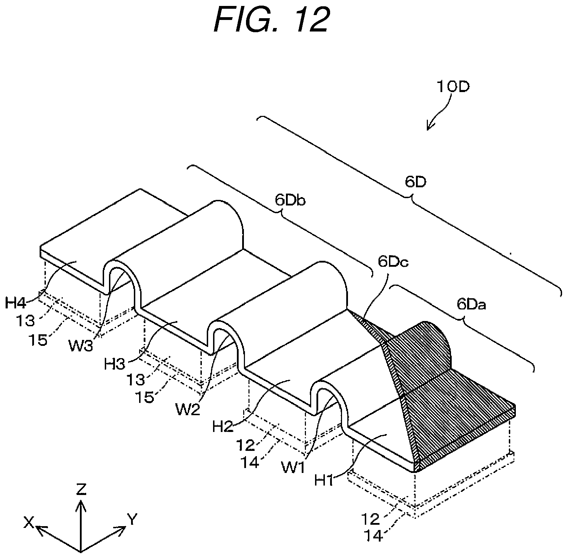

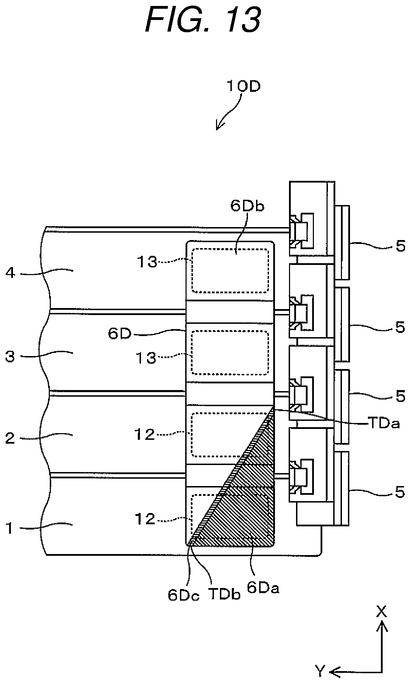

As illustrated in Figs. 12 and 13, as with the bus bar 6 in the first embodiment, the bus bar 6D is configured of a single structure, in which a first conductive part 6Da, a second conductive part 6Db, and a connecting part 6Dc, which electrically connects the first conductive part 6Da and the second conductive part 6Db, are integrally combined. As with the connecting part 6c in the first embodiment, the connecting part 6Dc indicates a boundary portion between the first conductive part 6Da and the second conductive part 6Db. As with the bus bar 6 in the first embodiment, the bus bar 6D has flat regions H1, H2, H3, and H4, which face in parallel with the first cell 1, the second cell 2, the third cell 3, and the fourth cell 4, respectively, along the stacking direction of the cells 1 to 4.

The bus bar 6D has curved regions W1, W2, and W3 similar to those in the first embodiment, which function in the same way as in the first embodiment.

As with the bus bar 6 in the first embodiment, the first conductive part 6Da is made of a metal material mainly including aluminum, and is joined at the flat regions H1 and H2 to the positive electrode external terminals 12, made of aluminum or aluminum alloy, of the first and second cells 1 and 2 by point joining or surface joining with a joining method such as laser welding. The first conductive part 6Da has lower conductivity and smaller specific gravity than the second conductive part 6Db.

As with the bus bar 6 in the first embodiment, the second conductive part 6Db is made of a metal material mainly including copper, and is joined at the flat regions H3 and H4 to the negative electrode external terminals 13, made of copper or copper alloy, of the third and fourth cells 3 and 4 by point joining or surface joining with a joining method such as laser welding. The second conductive part 6Db has higher conductivity and larger specific gravity than the first conductive part 6Da.

Since the connecting part 6Dc connects the first conductive part 6Da and the second conductive part 6Db as with the bus bar 6 in the first embodiment, the bus bar 6D is made of a clad material of aluminum and copper. As illustrated in Fig. 13, the connecting part 6Dc is disposed from one end TDa to the other end TDb in the width direction of the bus bar 6D diagonally across the extending direction of the bus bar 6D. The connecting part 6Dc is formed over the entire width of the bus bar 6D, and divides the bus bar 6D into a first side including the first conductive part 6Da and a second side including the second conductive part 6Db in the extending direction of the bus bar 6D. The connecting part 6Dc is entirely formed in a first region, which faces the second cell 2 and the first cell 1, of the bus bar 6D. The connecting part 6Dc extends across between the flat regions H1 and H2 diagonally with respect to the extending direction (X direction) of the bus bar 6D while passing over the curved region W1.

For the connecting part 6Dc, as illustrated in Figs. 12 and 13, in the first region, the end TDa on one width-directional side of the bus bar 6D is disposed at a position facing the second cell 2 between the edge of the second cell 2 on the side facing the third cell 3 and the side facing the third cell 3 of the positive electrode external terminal 12 of the second cell 2, and the end TDb on the other width-directional side of the bus bar 6D is disposed at a position facing the first cell 1 between the edge of the first cell 1 on the side where the first cell 1 is away from the second cell 2 (the edge of the cell lid 22 of the first cell 1) and the side where the positive electrode external terminal 12 of the first cell 1 is away from the second cell 2.

Since the first conductive part 6Da and the positive electrode external terminals 12 in the flat regions H1 and H2 are each made of aluminum, the first conductive part 6Da and the respective positive electrode external terminals 12 are joined together in the region of the first conductive part 6Da in the flat regions H1 and H2. On the other hand, in the region from the connecting part 6Dc to the curved region W1 or W2 in the flat regions H1 and H2, since the second conductive part 6Db is made of copper, while the positive electrode external terminals 12 are made of aluminum, corrosion may occur due to contact between the dissimilar metals. The bus bar 6D has a corrosion prevention structure to prevent such corrosion.

As with the bus bar 6A in the second embodiment, examples of the corrosion prevention structure include the bus bar 6D that has a non-contact region or a contact region similar to that of the bus bar 6A in an opposing region of the opposing surface facing one terminal, which includes a material different from the material of the bus bar 6D, between the positive and negative electrode external terminals 12 and 13.

Since connection of the cells and current flowing through each cell in the battery pack 10D according to the fifth embodiment are the same as in the battery pack 10 according to the first embodiment, description thereof is omitted.

Current flows between the first cell as well as the second cell and the third cell as well as the fourth cell between a location where the bus bar 6D is joined to the positive electrode external terminal 12 of the second cell 2, and a location where the bus bar 6D is joined to the negative electrode external terminal 13 of the third cell 3, resulting in relatively large current.

Effects of the battery pack 10D according to the fifth embodiment are now described.

The battery pack 10D according to the fifth embodiment includes: the positive electrode external terminals 12 and the negative electrode external terminals 13 each having higher conductivity than the positive electrode external terminal 12; the first cell 1, the second cell 2, the third cell 3, and the fourth cell 4 stacked in this order; and the bus bar 6D including the first conductive part 6Da, the second conductive part 6Db having higher conductivity and larger specific gravity than the first conductive part 6Da, and the connecting part 6Dc.

The first conductive part 6Da is joined to the positive electrode external terminals 12 of the first and second cells 1 and 2, and the second conductive part 6Db is joined to the negative electrode external terminals 13 of the third and fourth cells 3 and 4. The connecting part 6Dc is configured so as to extend linearly from the end on one width-directional side to the end on the other width-directional side of the bus bar 6D diagonally across the extending direction of the bus bar 6D. For the connecting part 6Dc, the end on one width-directional side of the bus bar 6D is disposed at a diagonal position between the edge of the second cell 2 on the side facing the third cell 3 and the positive electrode external terminal 12 of the second cell 2, and the end on the other width-directional side of the bus bar 6D is disposed at a diagonal position between the edge of the first cell 1 on the side away from the second cell 2 and the positive electrode external terminal 12 of the first cell 1.

According to the battery pack 10D of the fifth embodiment, since the second conductive part 6Db has a length extending from a position facing the third and fourth cells 3 and 4 to a position facing the first and second cells 1 and 2, and the connecting part 6Dc is configured so as to extend linearly from the end on one width-directional side of the bus bar 6D to the end on the first cell 1 side in the extending direction of the bus bar 6D diagonally across the extending direction of the bus bar 6D, the second conductive part 6Db, having a relatively high conductivity, has a wider current flow region than the first conductive part 6Da. As a result, current easily flows between the first cell 1 as well as the second cell 2 and the third cell 3 as well as the fourth cell 4, and heat generation of the bus bar 6D is thus suppressed, and in turn acceleration of deterioration of the unit cell due to heat generation is suppressed, advantageously making it possible to improve performance of the battery pack 10D.

For the battery pack 10D according to the fifth embodiment, the second conductive part 6Db of the bus bar 6D faces the second cell 2, and any region of the connecting part 6Dc is located in any one region from the positive electrode external terminal 12 of the second cell 2 to the first cell 1. Such a configuration advantageously makes it possible to achieve a good balance between weight reduction of the battery pack 10D and suppression of deterioration of the unit cell due to heat generation by the first conductive part 6Da having smaller specific gravity but lower conductivity, and the second conductive part 6Db having higher specific gravity but higher conductivity.

### Sixth Embodiment

The battery pack 10E according to a sixth embodiment includes a first cell 1, a second cell 2, a third cell 3, a fourth cell 4, a cell holder 5, and a bus bar 6E.

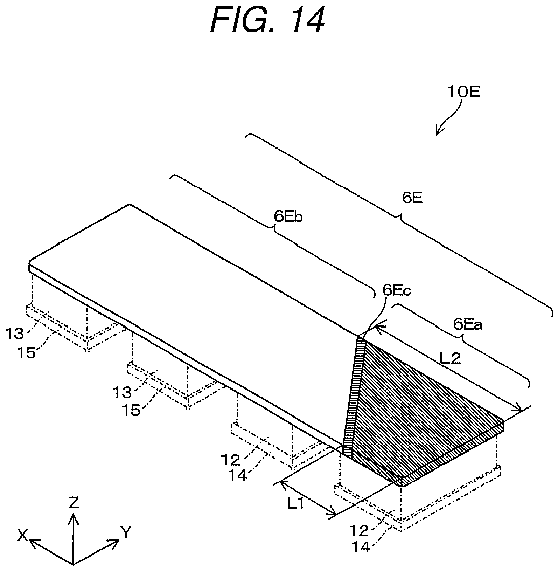

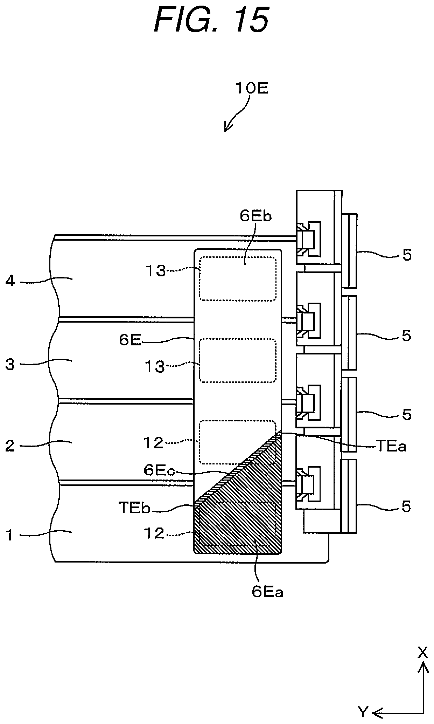

As illustrated in Figs. 14 and 15, as with the bus bar 6 in the first embodiment, the bus bar 6E is configured of a single structure, in which a first conductive part 6Ea, a second conductive part 6Eb, and a connecting part 6Ec, which electrically connects the first conductive part 6Ea and the second conductive part 6Eb, are integrally combined. As with the connecting part 6c in the first embodiment, the connecting part 6Ec indicates a boundary portion between the first conductive part 6Ea and the second conductive part 6Eb. The bus bar 6E has a flat-plate shape having only a flat region.

As with the bus bar 6 in the first embodiment, the first conductive part 6Ea is made of a metal material mainly including aluminum, and is joined to the positive electrode external terminals 12, made of aluminum or aluminum alloy, of the first and second cells 1 and 2 by point joining or surface joining with a joining method such as laser welding. The first conductive part 6Ea has lower conductivity and smaller specific gravity than the second conductive part 6Eb.

As with the bus bar 6 in the first embodiment, the second conductive part 6Eb is made of a metal material mainly including copper, and is joined to the negative electrode external terminals 13, made of copper or copper alloy, of the third and fourth cells 3 and 4 by point joining or surface joining with a joining method such as laser welding. The second conductive part 6Eb has higher conductivity and larger specific gravity than the first conductive part 6Ea.

Since the connecting part 6Ec connects the first conductive part 6Ea and the second conductive part 6Eb as with the bus bar 6 in the first embodiment, the bus bar 6E is made of a clad material of aluminum and copper. As illustrated in Fig. 14, the connecting part 6Ec is disposed from one end TEa to the other end TEb in the width direction of the bus bar 6E diagonally across the extending direction of the bus bar 6E. The connecting part 6Ec is formed over the entire width of the bus bar 6E, and divides the bus bar 6E into a first side including the first conductive part 6Ea and a second side including the second conductive part 6Eb in the extending direction of the bus bar 6E. The connecting part 6Ec is entirely formed in a first region, which faces the second cell 2 and the first cell 1, of the bus bar 6E.

For the connecting part 6Ec, the end TEa on one width-directional side of the bus bar 6E is disposed at a position facing the second cell 2 between the edge of the second cell 2 on the side facing the third cell 3 and the center of the positive electrode external terminal 12 of the second cell 2, the center being the center in the stacking direction of the plurality of cells, and the end TEb on the other width-directional side of the bus bar 6E is disposed at a position facing the first cell 1 between the edge of the first cell 1 on the side facing the second cell 2 and the side away from the second cell of the positive electrode external terminal of the first cell 1.

Since the first conductive part 6Ea and the positive electrode external terminal 12 are each made of aluminum, the bus bar 6E and the positive electrode external terminal 12 are joined together in the region of the first conductive part 6Ea of the bus bar 6E. On the other hand, in the region where the second conductive part 6Eb of the bus bar 6E is in contact with the positive electrode external terminal 12, since the second conductive part 6Eb is made of copper, while the positive electrode external terminal 12 is made of aluminum, corrosion may occur due to contact between the dissimilar metals. The bus bar 6E has a corrosion prevention structure to prevent such corrosion.

As with the bus bar 6A in the second embodiment, examples of the corrosion prevention structure include the bus bar 6E that has a non-contact region or a contact region similar to that of the bus bar 6A in an opposing region of the opposing surface facing one terminal, which includes a material different from the material of the bus bar 6E, between the positive and negative electrode external terminals 12 and 13.

Since connection of the cells and current flowing through each cell in the battery pack 10E according to the sixth embodiment are the same as in the battery pack 10 according to the first embodiment, description thereof is omitted.

Current flows between the first cell as well as the second cell and the third cell as well as the fourth cell between a location where the bus bar 6E is joined to the positive electrode external terminal 12 of the second cell 2, and a location where the bus bar 6E is joined to the negative electrode external terminal 13 of the third cell 3, resulting in relatively large current.

Effects of the battery pack 10E according to the sixth embodiment are now described.

The battery pack 10E according to the sixth embodiment includes: the positive electrode external terminals 12 and the negative electrode external terminals 13 each having higher conductivity than the positive electrode external terminal 12; the first cell 1, the second cell 2, the third cell 3, and the fourth cell 4 stacked in this order; and the bus bar 6E including the first conductive part 6Ea, the second conductive part 6Eb having higher conductivity and larger specific gravity than the first conductive part 6Ea, and the connecting part 6Ec.

The first conductive part 6Ea is joined to the positive electrode external terminals 12 of the first and second cells 1 and 2, and the second conductive part 6Eb is joined to the negative electrode external terminals 13 of the third and fourth cells 3 and 4. The connecting part 6Ec is configured so as to extend linearly from the end on one width-directional side to the end on the other width-directional side of the bus bar 6E diagonally across the extending direction of the bus bar 6E. For the connecting part 6Ec, the end on one width-directional side of the bus bar 6E is disposed at a diagonal position between the edge of the second cell 2 on the side facing the third cell 3 and the positive electrode external terminal 12 of the second cell 2, and an end on the other width-directional side of the bus bar 6E is disposed at a diagonal position between the edge of the first cell 1 on the side facing the second cell 2 and the positive electrode external terminal 12 of the first cell 1.

According to the battery pack 10E of the sixth embodiment, since the end of the second conductive part 6Eb has a length extending from a position facing the third and fourth cells 3 and 4 to a position facing the second and first cells 2 and 1, and the connecting part 6Ec is configured so as to extend linearly from the end on one width-directional side to the end on the other width-directional side of the bus bar 6E diagonally across the extending direction of the bus bar 6E, the second conductive part 6Eb, having a relatively high conductivity, has a wider current flow region than the first conductive part 6Ea. As a result, current easily flows between the first cell 1 as well as the second cell 2 and the third cell 3 as well as the fourth cell 4, and heat generation of the bus bar 6E is thus suppressed, and in turn acceleration of deterioration of the unit cell due to heat generation is suppressed, advantageously making it possible to improve performance of the battery pack 10E.

For the battery pack 10E according to the sixth embodiment, the second conductive part 6Eb of the bus bar 6E faces the second cell 2, and any region of the connecting part 6Ec is located in any one region from the positive electrode external terminal 12 of the second cell 2 to the first cell 1. Such a configuration advantageously makes it possible to achieve a good balance between weight reduction of the battery pack 10E and suppression of deterioration of the unit cell due to heat generation by the first conductive part 6Ea having smaller specific gravity but lower conductivity, and the second conductive part 6Eb having higher specific gravity but higher conductivity.

### Seventh Embodiment

The battery pack 10F according to a seventh embodiment includes a first cell 1, a second cell 2, a third cell 3, a fourth cell 4, a cell holder 5, and a bus bar 6F.

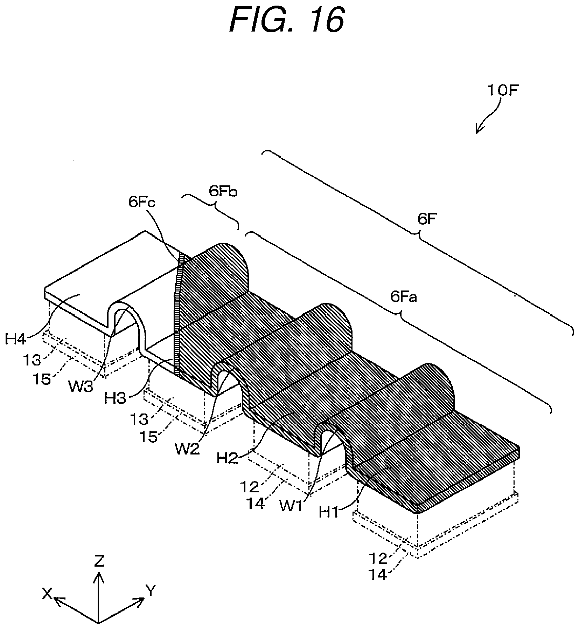

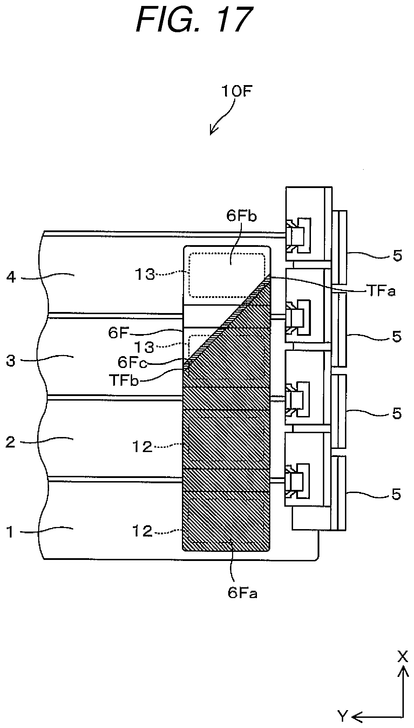

As illustrated in Figs. 16 and 17, as with the bus bar 6 in the first embodiment, the bus bar 6F is configured of a single structure, in which a first conductive part 6Fa, a second conductive part 6Fb, and a connecting part 6Fc, which electrically connects the first conductive part 6Fa and the second conductive part 6Fb, are integrally combined. As with the connecting part 6c in the first embodiment, the connecting part 6Fc indicates a boundary portion between the first conductive part 6Fa and the second conductive part 6Fb. As with the bus bar 6 in the first embodiment, the bus bar 6F has flat regions H1, H2, H3, and H4, which face in parallel with the first cell 1, the second cell 2, the third cell 3, and the fourth cell 4, respectively, along the stacking direction of the cells 1 to 4.

The bus bar 6F has curved regions W1, W2, and W3 similar to those in the first embodiment, which function in the same way as in the first embodiment.

As with the bus bar 6 in the first embodiment, the first conductive part 6Fa is made of a metal material mainly including aluminum, and is joined at the flat regions H1 and H2 to the positive electrode external terminals 12, made of aluminum or aluminum alloy, of the first and second cells 1 and 2 by point joining or surface joining with a joining method such as laser welding. The first conductive part 6Fa has lower conductivity and smaller specific gravity than the second conductive part 6Fb.

As with the bus bar 6 in the first embodiment, the second conductive part 6Fb is made of a metal material mainly including copper, and is joined at the flat regions H3 and H4 to the negative electrode external terminals 13, made of copper or copper alloy, of the third and fourth cells 3 and 4 by point joining or surface joining with a joining method such as laser welding. The second conductive part 6Fb has higher conductivity and larger specific gravity than the first conductive part 6Fa.

Since the connecting part 6Fc connects the first conductive part 6Fa and the second conductive part 6Fb as with the bus bar 6 in the first embodiment, the bus bar 6F is made of a clad material of aluminum and copper. As illustrated in Fig. 17, the connecting part 6Fc is disposed from one end TFa to the other end TFb in the width direction of the bus bar 6F diagonally across the extending direction of the bus bar 6F. The connecting part 6Fc is formed over the entire width of the bus bar 6F, and divides the bus bar 6F into a first side including the first conductive part 6Fa and a second side including the second conductive part 6Fb in the extending direction of the bus bar 6F. The connecting part 6Fc is entirely formed in a second region, which faces the third cell 3 and the fourth cell 4, of the bus bar 6F. The connecting part 6Fc extends across between the flat regions H3 and H4 diagonally with respect to the extending direction (X direction) of the bus bar 6F while passing over the curved region W3.

For the connecting part 6Fc, as illustrated in Figs. 16 and 17, in the second region, the end TFa on one width-directional side of the bus bar 6F is disposed at a diagonal position between the edge of the fourth cell 4 on the side facing the third cell 3 (the edge of the cell lid 22 of the fourth cell 4) and the negative electrode external terminal 13 of the fourth cell 4, and the end TFb on the other width-directional side of the bus bar 6F is disposed at a diagonal position between the edge of the third cell 3 on the side facing the second cell 2 (the edge of the cell lid 22 of the third cell 3) and the negative electrode external terminal 13 of the third cell 3.

Since the second conductive part 6Fb and the negative electrode external terminal 13 in the flat regions H3 and H4 are each made of copper, the second conductive part 6Fb and the negative electrode external terminal 13 are joined together in the region of the second conductive part 6Fb in the flat regions H3 and H4.

On the other hand, in the region from the connecting part 6Fc to the curved region W3 or W2 in the flat regions H3 and H4, since the first conductive part 6Fa is made of aluminum, while the negative electrode external terminal 13 is made of copper, corrosion may occur due to contact between the dissimilar metals. The bus bar 6F has a corrosion prevention structure to prevent such corrosion.

As with the bus bar 6A in the second embodiment, examples of the corrosion prevention structure include the bus bar 6F that has a non-contact region or a contact region similar to that of the bus bar 6A in an opposing region of the opposing surface facing one terminal, which includes a material different from the material of the bus bar 6F, between the positive and negative electrode external terminals 12 and 13.

Since connection of the cells and current flowing through each cell in the battery pack 10F according to the seventh embodiment are the same as in the battery pack 10 according to the first embodiment, description thereof is omitted.

Current flows between the first cell as well as the second cell and the third cell as well as the fourth cell between a location where the bus bar 6F is joined to the positive electrode external terminal 12 of the second cell 2, and a location where the bus bar 6F is joined to the negative electrode external terminal 13 of the third cell 3, resulting in relatively large current.

Effects of the battery pack 10F according to the seventh embodiment are now described.

The battery pack 10F according to the seventh embodiment includes: the positive electrode external terminals 12 and the negative electrode external terminals 13 each having higher conductivity than the positive electrode external terminal 12; the first cell 1, the second cell 2, the third cell 3, and the fourth cell 4 stacked in this order; and the bus bar 6F including the first conductive part 6Fa, the second conductive part 6Fb having higher conductivity and larger specific gravity than the first conductive part 6Fa, and the connecting part 6Fc.

The first conductive part 6Fa is joined to the positive electrode external terminals 12 of the first and second cells 1 and 2, and the second conductive part 6Fb is joined to the negative electrode external terminals 13 of the third and fourth cells 3 and 4. The connecting part 6Fc is configured so as to extend linearly from the end on one width-directional side to the end on the other width-directional side of the bus bar 6F diagonally across the extending direction of the bus bar 6F. For the connecting part 6Fc, the end TFa on one width-directional side of the bus bar 6F is disposed at a diagonal position between the edge of the fourth cell 4 on the side facing the third cell 3 and the negative electrode external terminal 13 of the fourth cell 4, and the end TFb on the other width-directional side of the bus bar 6F is disposed at a diagonal position between the edge of the third cell 3 on the side facing the second cell 2 and the negative electrode external terminal 13 of the third cell 3.

According to the battery pack 10F of the seventh embodiment, since the end of the first conductive part 6Fa has a length extending from a position facing the first and second cells 1 and 2 to a position facing the third and fourth cells 3 and 4, and the connecting part 6Fc is configured so as to extend linearly from the end on one width-directional side to the end on the other width-directional side of the bus bar 6F diagonally across the extending direction of the bus bar 6F, the first conductive part 6Fa, having a relatively small specific gravity, has a longer length and thus has a larger volume than the second conductive part 6Fb. Consequently, as a main effect, weight of the battery pack 10F can be reduced.

### Eighth Embodiment

The battery pack 10G according to an eighth embodiment includes a first cell 1, a third cell 3, two cell holders 5 to hold both ends of each cell, and a bus bar 6G. The first cell 1 and the third cell 3 are connected in series via the bus bar 6G.

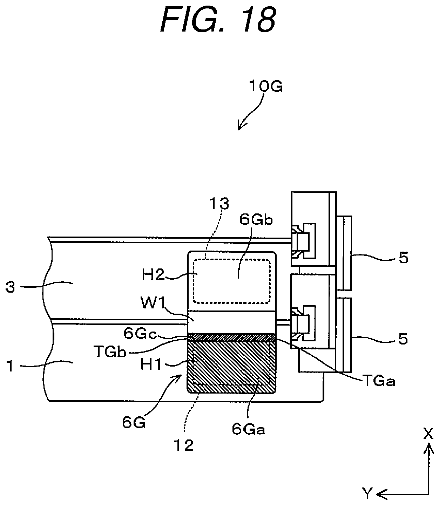

As illustrated in Fig. 18, the bus bar 6G is configured of a single structure, in which a first conductive part 6Ga, a second conductive part 6Gb, and a connecting part 6Gc, which electrically connects the first conductive part 6Ga and the second conductive part 6Gb, are integrally combined. As with the connecting part 6c in the first embodiment, the connecting part 6Gc indicates a boundary portion between the first conductive part 6Ga and the second conductive part 6Gb. The bus bar 6G has flat regions H1 and H2 facing in parallel with the respective first and third cells 1 and 3 along the stacking direction of the cells 1 and 3.

The bus bar 6G further has a curved region W1 as in the first embodiment, which functions in the same way as in the first embodiment.

The first conductive part 6Ga is made of a metal material mainly including aluminum, and is joined at the flat region H1 to the positive electrode external terminal 12, made of aluminum or aluminum alloy, of the first cell 1 by point joining or surface joining with a joining method such as laser welding. The first conductive part 6Ga has lower conductivity and smaller specific gravity than the second conductive part 6Gb.

The second conductive part 6Gb is made of a metal material mainly including copper, and is joined at the flat region H2 to the negative electrode external terminal 13, made of copper or copper alloy, of the third cell 3 by point joining or surface joining with a joining method such as laser welding. The second conductive part 6Gb has higher conductivity and larger specific gravity than the first conductive part 6Ga.

Since the connecting part 6Gc connects the first conductive part 6Ga and the second conductive part 6Gb, the bus bar 6G is made of a clad material of aluminum and copper. As illustrated in Fig. 18, the connecting part 6Gc is disposed from an end TGa on one side of the bus bar 6G to an end TGb on the other side thereof in the width direction (Y direction) perpendicular to the extending direction (X direction) of the bus bar 6G. The connecting part 6Gc is formed over the entire width of the bus bar 6G, and divides the bus bar 6G into a first side including the first conductive part 6Ga and a second side including the second conductive part 6Gb in the extending direction of the bus bar 6G. The connecting part 6Gc is entirely formed in a first region, which faces the first cell 1, of the bus bar 6G. The connecting part 6Gc is formed in the flat region H1 in the eighth embodiment, and is provided along the width direction of the bus bar 6G near the boundary of the flat region H1 and the curved region W1. When the bus bar 6G is attached as shown in Fig. 18, the connecting part 6Gc is disposed at a position facing the cell lid 22 of the first cell 1 between an edge of the cell lid 22 and the positive electrode external terminal 12 of the first cell 1.

Effects of the battery pack 10G according to the eighth embodiment are now described.

The battery pack 10G according to the eighth embodiment includes: the positive electrode external terminal 12 and the negative electrode external terminal 13 having higher conductivity than the positive electrode external terminal 12; the first and third cells 1 and 3 connected in series; and the bus bar 6G including the first conductive part 6Ga, the second conductive part 6Gb having higher conductivity and higher specific gravity than the first conductive part 6Ga, and the connecting part 6Gc. The bus bar 6G includes the first conductive part 6Ga connected to the positive electrode external terminal 12, the second conductive part 6Gb connected to the negative electrode external terminal 13 and having higher conductivity and higher specific gravity than the first conductive part 6Ga, and the connecting part 6Gc that connects the first conductive part 6Ga and the second conductive part 6Gb, where the connecting part 6Gc is disposed at a position facing the first cell 1.

In more details, the battery pack 10G includes the first cell 1 and the third cell 3 as the plurality of cells, in which the positive electrode external terminal 12 of the first cell 1 and the negative electrode external terminal 13 of the third cell 3 are disposed side by side next to each other in the stacking direction of the cells. The bus bar 6G extends along the stacking direction of the cells, and is disposed at a position facing the positive electrode external terminal 12 of the first cell 1 and the negative electrode external terminal 13 of the third cell 3. The first conductive part 6Ga is joined to the positive electrode external terminal 12 of the first cell 1, the second conductive part 6Gb is joined to the negative electrode external terminals 13 of the third cell 3, and the connecting part 6Gc is disposed in a region, facing the first cell 1, as the first region.

According to the battery pack 10G of the eighth embodiment, since the end of the second conductive part 6Gb has a length extending from a position facing the third cell 3 to a position facing the first cell 1, and the connecting part 6Gc is configured to be disposed at a position facing the cell lid 22 of the first cell 1, the second conductive part 6Gb, having a relatively high conductivity, has a wider current flow region than the first conductive part 6Ga. As a result, current easily flows between the first cell 1 and the third cell 3, and heat generation of the bus bar 6G is thus suppressed, and in turn acceleration of deterioration of the unit cell due to heat generation is suppressed, advantageously making it possible to improve performance of the battery pack 10G.

In the battery pack 10G of the eighth embodiment, the second conductive part 6Gb of the bus bar 6G faces the third cell 3, and the entire region of the connecting part 6Gc is disposed at a position facing a region from the edge of the first cell 1 on the side facing the third cell 3 to the positive electrode external terminal 12 of the first cell 1.

Such a configuration advantageously makes it possible to achieve a good balance between reduction in weight of the battery pack 10G and suppression of deterioration of the unit cell due to heat generation by the first conductive part 6Ga having smaller specific gravity but lower conductivity, and the second conductive part 6Gb having higher specific gravity but higher conductivity.

### Ninth Embodiment

The battery pack 10H according to a ninth embodiment includes a first cell 1, a third cell 3, two cell holders 5 to hold both ends of each cell, and a bus bar 6H. The first cell 1 and the third cell 3 are connected in series via the bus bar 6H.

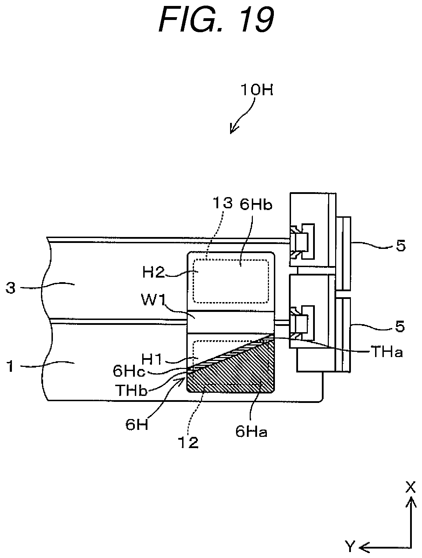

As illustrated in Fig. 19, the bus bar 6H is configured of a single structure, in which a first conductive part 6Ha, a second conductive part 6Hb, and a connecting part 6Hc, which electrically connects the first conductive part 6Ha and the second conductive part 6Hb, are integrally combined. As with the connecting part 6c in the first embodiment, the connecting part 6Hc indicates a boundary portion between the first conductive part 6Ha and the second conductive part 6Hb. The bus bar 6H has flat regions H1 and H2 facing in parallel with the respective first and third cells 1 and 3 along the stacking direction of the cells 1 and 3.

The bus bar 6H further has a curved region W1 as in the first embodiment, which functions in the same way as in the first embodiment.

The first conductive part 6Ha is made of a metal material mainly including aluminum, and is joined at the flat region H1 to the positive electrode external terminal 12, made of aluminum or aluminum alloy, of the first cell 1 by point joining or surface joining with a joining method such as laser welding. The first conductive part 6Ha has lower conductivity and smaller specific gravity than the second conductive part 6Hb.

The second conductive part 6Hb is made of a metal material mainly including copper, and is joined at the flat region H2 to the negative electrode external terminal 13, made of copper or copper alloy, of the third cell 3 by point joining or surface joining with a joining method such as laser welding. The second conductive part 6Hb has higher conductivity and larger specific gravity than the first conductive part 6Ha.

Since the connecting part 6Hc connects the first conductive part 6Ha and the second conductive part 6Hb, the bus bar 6H is made of a clad material of aluminum and copper. As illustrated in Fig. 19, the connecting part 6Hc is disposed from one end THa to the other end THb in the width direction of the bus bar 6H diagonally across the extending direction (X direction) of the bus bar 6H. The connecting part 6Hc is formed over the entire width of the bus bar 6H, and divides the bus bar 6H into a first side including the first conductive part 6Ha and a second side including the second conductive part 6Hb in the extending direction of the bus bar 6H. The connecting part 6Hc is entirely formed in a first region, which faces the first cell 1, of the bus bar 6H.

For the connecting part 6Hc, as illustrated in Fig. 19, in the first region, the end THa on one width-directional side of the bus bar 6H is disposed at a diagonal position between the edge of the first cell 1 on the side facing the third cell 3 (the edge of the cell lid 22 of the first cell 1) and an edge of the positive electrode external terminal 12 of the first cell 1 on a side facing the third cell 3, and the end THb on the other width-directional side of the bus bar 6H is disposed at a diagonal position on the inner longitudinal side of the cell lid 22 with respect to the positive electrode external terminal 12 of the first cell 1. In the ninth embodiment, the end THb on the other width-directional side of the bus bar 6H is disposed at a central position of the positive electrode external terminal 12 of the first cell 1 in the stacking direction of the cells.

Since the first conductive part 6Ha and the positive electrode external terminal 12 in the flat region H1 are each made of aluminum, the first conductive part 6Ha and the positive electrode external terminal 12 are joined together in the region of the first conductive part 6Ha in the flat region H1. On the other hand, in the region from the connecting part 6Hc to the curved region W1 in the flat region H1, since the second conductive part 6Hb is made of copper, while the positive electrode external terminal 12 is made of aluminum, corrosion may occur due to contact between the dissimilar metals. The bus bar 6H has a corrosion prevention structure to prevent such corrosion.

As with the bus bar 6A in the second embodiment, examples of the corrosion prevention structure include the bus bar 6H that has a non-contact region or a contact region similar to that of the bus bar 6A in an opposing region of the opposing surface facing one terminal, which includes a material different from the material of the bus bar 6H, between the positive and negative electrode external terminals 12 and 13.

Effects of the battery pack 10H according to the ninth embodiment are now described.

The battery pack 10H according to the ninth embodiment includes: the positive electrode external terminal 12 and the negative electrode external terminal 13 having higher conductivity than the positive electrode external terminal 12; the first and third cells 1 and 3 connected in series; and the bus bar 6H including the first conductive part 6Ha, the second conductive part 6Hb having higher conductivity and higher specific gravity than the first conductive part 6Ha, and the connecting part 6Hc.

The first conductive part 6Ha is joined to the positive electrode external terminals 12 of the first cell 1, and the second conductive part 6Hb is joined to the negative electrode external terminals 13 of the third cell 3. The connecting part 6Hc is configured so as to extend linearly from the end on one width-directional side to the end on the other width-directional side of the bus bar 6H diagonally across the extending direction of the bus bar 6H. For the connecting part 6Hc, the end on one width-directional side of the bus bar 6H is disposed at a diagonal position between the edge of the first cell 1 on the side facing the third cell 3 and the edge of the positive electrode external terminal 12 of the first cell 1 on the side opposite to the edge on the side facing the third cell 3, and the end on the other width-directional side of the bus bar 6H is disposed at a diagonal position between the edge of the positive electrode external terminal 12 of the first cell 1 on the side facing the third cell 3 and the edge of the first cell 1 on the side opposite to the side facing the third cell 3.

According to the battery pack 10H of the ninth embodiment, since the end of the second conductive part 6Hb has a length extending from the position facing the third cell 3 to the position facing the first cell 1, and the connecting part 6Hc is configured so as to extend linearly from the end on one width-directional side to the end on the other width-directional side of the bus bar 6H diagonally across the extending direction of the bus bar 6H, the second conductive part 6Hb, having a relatively high conductivity, has a wider current flow region than the first conductive part 6Ha. As a result, current easily flows between the first cell 1 and the third cell 3, and heat generation of the bus bar 6H is thus suppressed, and in turn acceleration of deterioration of the unit cell due to heat generation is suppressed, advantageously making it possible to improve performance of the battery pack 10H.

### Tenth Embodiment

The battery pack 10I according to a tenth embodiment includes a first cell 1, a third cell 3, two cell holders 5 to hold both ends of each cell, and a bus bar 6I. The first cell 1 and the third cell 3 are connected in series via the bus bar 6I.

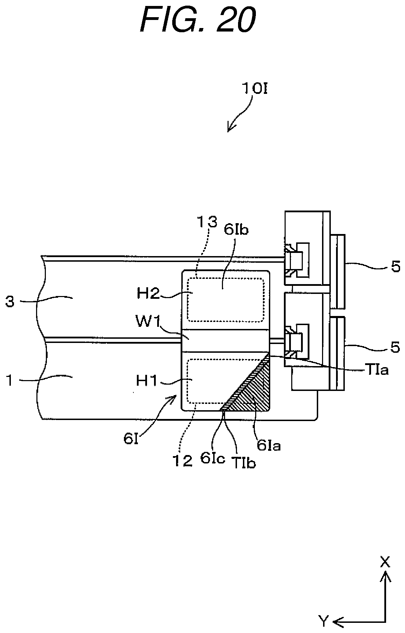

As illustrated in Fig. 20, the bus bar 6I is configured of a single structure, in which a first conductive part 6Ia, a second conductive part 6Ib, and a connecting part 6Ic, which electrically connects the first conductive part 6Ia and the second conductive part 6Ib, are integrally combined. As with the connecting part 6c in the first embodiment, the connecting part 6Ic indicates a boundary portion between the first conductive part 6Ia and the second conductive part 61b. The bus bar 6I has flat regions H1 and H2 facing in parallel with the respective first and third cells 1 and 3 along the stacking direction of the cells 1 and 3.

The bus bar 6I further has a curved region W1 as in the first embodiment, which functions in the same way as in the first embodiment.

The first conductive part 6Ia is made of a metal material mainly including aluminum, and is joined at the flat region H1 to the positive electrode external terminal 12, made of aluminum or aluminum alloy, of the first cell 1 by point joining or surface joining with a joining method such as laser welding. The first conductive part 6Ia has lower conductivity and smaller specific gravity than the second conductive part 61b.

The second conductive part 6Ib is made of a metal material mainly including copper, and is joined at the flat region H2 to the negative electrode external terminal 13, made of copper or copper alloy, of the third cell 3 by point joining or surface joining with a joining method such as laser welding. The second conductive part 6Ib has higher conductivity and larger specific gravity than the first conductive part 61a.

Since the connecting part 6Ic connects the first conductive part 6Ia and the second conductive part 6Ib, the bus bar 6I is made of a clad material of aluminum and copper. As illustrated in Fig. 20, the connecting part 6Ic is disposed from an end TIa on one width-directional side of the bus bar 6I to an extending-directional end TIb of the bus bar 6I diagonally across the extending direction (X direction) of the bus bar 6I. The connecting part 6Ic divides the bus bar 6I into a first side including the first conductive part 6Ia and a second side including the second conductive part 6Ib in the extending direction of the bus bar 6I. The connecting part 6Ic is entirely formed in a first region, which faces the first cell 1, of the bus bar 6I.

For the connecting part 6Ic, as illustrated in Fig. 20, in the first region, the end TIa on one width-directional side of the bus bar 6I is disposed at a diagonal position between the edge of the first cell 1 on the side facing the third cell 3 (the edge of the cell lid 22 of the first cell 1) and the positive electrode external terminal 12 of the first cell 1, and the extending-directional end TIb of the bus bar 6I is disposed at a position facing the positive electrode external terminal 12 of the first cell 1 and being the central position of the positive electrode external terminal 12 in the width direction perpendicular to the stacking direction of the cells.

Since the first conductive part 6Ia and the positive electrode external terminal 12 in the flat region H1 are each made of aluminum, the first conductive part 6Ia and the positive electrode external terminal 12 are joined together in the region of the first conductive part 6Ia in the flat region H1. On the other hand, in the region from the connecting part 6Ic to the curved region W1 in the flat region H1, since the second conductive part 6Ib is made of copper, while the positive electrode external terminal 12 is made of aluminum, corrosion may occur due to contact between the dissimilar metals. The bus bar 6A has a corrosion prevention structure to prevent such corrosion.

As with the bus bar 6A in the second embodiment, examples of the corrosion prevention structure include the bus bar 6I that has a non-contact region or a contact region similar to that of the bus bar 6A in an opposing region of the opposing surface facing one terminal, which includes a material different from the material of the bus bar 6I, between the positive and negative electrode external terminals 12 and 13.

Effects of the battery pack 10I according to the tenth embodiment are now described.

The battery pack 10I according to the tenth embodiment includes: the positive electrode external terminal 12 and the negative electrode external terminal 13 having higher conductivity than the positive electrode external terminal 12; the first and third cells 1 and 3 connected in series; and the bus bar 6I including the first conductive part 6Ia, the second conductive part 6Ib having higher conductivity and higher specific gravity than the first conductive part 6Ia, and the connecting part 6Ic.

The first conductive part 6Ia is joined to the positive electrode external terminals 12 of the first cell 1, and the second conductive part 6Ib is joined to the negative electrode external terminals 13 of the third cell 3. The connecting part 6Ic is configured so as to extend linearly from the end on one width-directional side of the bus bar 6I to the extending-directional end of the bus bar 6I diagonally across the extending direction of the bus bar 6I. For the connecting part 6Ic, the end on one width-directional side of the bus bar 6I is disposed at a diagonal position between the edge of the first cell 1 on the side facing the third cell 3 and the positive electrode external terminal 12 of the first cell 1, and the extending-directional end of the bus bar 6I is disposed at a position facing the positive electrode external terminal 12 of the first cell 1 and being the central position of the positive electrode external terminal 12 in the width direction perpendicular to the stacking direction of the cells.

According to the battery pack 10I of the tenth embodiment, since the end of the second conductive part 6Ib has the length extending from the position facing the third cell 3 to the position facing the first cell 1, and the connecting part 6Ic is configured so as to extend linearly from the end on one width-directional side of the bus bar 6I to the position, which faces the positive electrode external terminal 12 of the first cell 1 and being the central position of the positive electrode external terminal 12 in the width direction perpendicular to the stacking direction of the cells, diagonally across the extending direction of the bus bar 6I, the second conductive part 6Ib, having a relatively high conductivity, has a wider current flow region than the first conductive part 6Ia. As a result, current easily flows between the first cell 1 and the third cell 3, and heat generation of the bus bar 6I is thus suppressed, and in turn acceleration of deterioration of the unit cell due to heat generation is suppressed, advantageously making it possible to improve performance of the battery pack 10I.

Although the above embodiments have been described on the bus bar that connects the positive electrode external terminal and the negative electrode external terminal to each other, it goes without saying that the invention can also be applied to other bus bars, including a bus bar to connect an electrode external terminal on an end side of a cell group and an external terminal for supplying power to the outside.

Thus, the invention should not be limited to the above embodiments, and various design changes can be made within the scope without departing form the spirit of the invention described in claims. For example, the above embodiments have been described in detail to clearly explain the invention, and are not necessarily required to include all the described configurations. Part of a configuration of one embodiment can be replaced with a configuration of another embodiment, and a configuration of one embodiment can be added to a configuration of another embodiment. In addition, part of a configuration of each embodiment can be subjected to addition, deletion, and replacement with respect to another configuration.

### Reference Signs List

1: First cell,
2: Second cell,
3: Third cell,
4: Fourth cell,
5: Cell holder,
6, 6A, 6B, 6C, 6D, 6E, 6F, 6G, 6H, 6I: Bus bar,
6a, 6Aa, 6Ba, 6Ca, 6Da, 6Ea, 6Fa, 6Ga, 6Ha, 6Ia: First conductive part,
6b, 6Ab, 6Bb, 6Cb, 6Db, 6Eb, 6Fb, 6Gb, 6Hb, 6Ib: Second conductive part,
6c, 6Ac, 6Bc, 6Cc, 6Dc, 6Ec, 6Fc, 6Gc, 6Hc, 6Ic: Connecting part,
10, 10A, 10B, 10C, 10D, 10E, 10F, 10G, 10H, 10I: Battery pack,
11: Cell container,
12: Positive electrode external terminal,
13: Negative electrode external terminal,
14, 15: Insulator,
16: Gas discharge valve,
21: Cell can,
22: Cell lid,
22a: Liquid injection plug,
H1, H2, H3, H4: Flat region,
Ta, TAa, TCa, TDa, TEa, TFa, TGa, THa, TIa: End on one side,
Tb, TAb, TCb, TDb, TEb, TFb, TGb, THb: End on the other side,
TBa, TBc: Edge,
TBb: Center,
TIb: Extending-directional end,
W1, W2, W3: Curved region.

## Claims

1. A battery pack, comprising:
a plurality of cells stacked together, each cell including a positive electrode external terminal and a negative electrode external terminal having higher conductivity than the positive electrode external terminal; and
a bus bar that electrically connects a positive electrode external terminal of a first one cell among the plurality of cells and a negative electrode external terminal of a second one cell among the plurality of cells, the first one cell and the second one cell being disposed side by side next to each other,
wherein the bus bar includes:
a first conductive part connected to the positive electrode external terminal of the first one cell;
a second conductive part connected to the negative electrode external terminal of the second one cell and having higher conductivity and higher specific gravity than the first conductive part; and
a connecting part that connects the first conductive part and the second conductive part,
the connecting part being disposed in a first region facing the first one cell or in a second region facing the second one cell.

2. The battery pack according to claim 1, the battery pack including at least a first cell, a second cell, a third cell, and a fourth cell as the plurality of cells,
wherein for the first cell and the second cell, the positive electrode external terminals as well as the negative electrode external terminals are disposed side by side next to each other in a stacking direction of the plurality of cells,
for the third cell and the fourth cell, the positive electrode external terminals as well as the negative electrode external terminals are disposed side by side next to each other in the stacking direction of the plurality of cells,
for the first cell as well as the second cell and the third cell as well as the fourth cell, the positive electrode external terminals of the first and second cells and the negative electrode external terminals of the third and fourth cells are disposed side by side next to each other in the stacking direction of the plurality of cells, and
the bus bar extends along the stacking direction of the plurality of cells, and is disposed at a position facing the positive electrode external terminals of the first and second cells and facing the negative electrode external terminals of the third and fourth cells; the first conductive part is joined to the positive electrode external terminals of the first and second cells, the second conductive part is joined to the negative electrode external terminals of the third and fourth cells; and the connecting part is disposed in a region, the region facing at least one of the first and second cells, as the first region, or in a region, the region facing at least one of the third and fourth cells, as the second region.

3. The battery pack according to claim 2, wherein the second conductive part extends from a position facing the third and fourth cells to a position facing the second cell, or extends from the position facing the third and fourth cells to a position facing the second and first cells.

4. The battery pack according to claim 3, wherein the connecting part is disposed from an end on one side to an end on the other side of the bus bar in a width direction perpendicular to an extending direction of the bus bar.

5. The battery pack according to claim 3, wherein the connecting part is disposed from an end on one side to an end on the other side in the width direction of the bus bar diagonally across an extending direction of the bus bar.

6. The battery pack according to claim 3, wherein the connecting part is disposed, in the first region, at a position facing the second cell between an edge of the second cell on a side facing the third cell and the positive electrode external terminal of the second cell.

7. The battery pack according to claim 3, wherein the connecting part is disposed at a position facing the positive electrode external terminal of the second cell in the first region.

8. The battery pack according to claim 3, wherein the connecting part has a substantially L-shape that extends from an end on one side toward the other side in a width direction perpendicular to the stacking direction of the plurality of cells at a position facing the positive electrode external terminal of the second cell in the first region, and is bent toward the stacking direction, and extends to a position facing the positive electrode external terminal of the first cell.

9. The battery pack according to claim 5, wherein for the connecting part, in the first region, an end on one side in the width direction of the bus bar is disposed at a position facing the second cell between an edge of the second cell on a side facing the third cell and the center of the positive electrode external terminal of the second cell, the center being the center in the stacking direction of the plurality of cells, and an end on the other side in the width direction of the bus bar is disposed at a position facing the first cell between the positive electrode external terminal of the first cell on a side facing the second cell and the center of the positive electrode external terminal of the second cell, the center being the center in the stacking direction of the plurality of cells.

10. The battery pack according to claim 5, wherein for the connecting part, in the first region, an end on one side in the width direction of the bus bar is disposed at a position facing the second cell between an edge of the second cell on a side facing the third cell and a side facing the third cell of the positive electrode external terminal of the second cell, and an end on the other side in the width direction of the bus bar is disposed at a position facing the first cell between an edge of the first cell on a side away from the second cell and a side facing the second cell of the positive electrode external terminal of the first cell.

11. The battery pack according to claim 1, wherein the bus bar has a plurality of flat regions arranged in a row while respectively facing the positive electrode external terminals and the negative electrode external terminals, and has curved regions that are each interposed between the plurality of flat regions and curved to protrude in a direction perpendicular to a plane of each of the flat regions and connect between the flat regions adjacent to each other, and
at least part of the connecting part is located in at least one of the flat regions.

12. The battery pack according to claim 1, wherein the bus bar extends along a stacking direction of the plurality of cells, and has a flat-plate shape facing the positive electrode external terminals and the negative electrode external terminals.

13. The battery pack according to claim 2, wherein the first conductive part extends from a position facing the first cell and the second cell to a position facing the third cell, or extends from a position facing the first cell and the second cell to a position facing the third cell and the fourth cell.

14. The battery pack according to claim 1, wherein the bus bar has an opposing surface facing the positive electrode external terminal and an opposing surface facing the negative electrode external terminal, and
in an opposing region of the opposing surface facing one terminal between the positive electrode external terminal and the negative electrode external terminal, the one terminal including a material different from a material of the bus bar, the bus bar has a non-contact region with a step to separate the bus bar from the one terminal, or a contact region to allow contact between the bus bar and the one terminal with a plated layer in between, the plated layer being formed in the opposing region.
